(19) Europäisches Patentamt
European Patent Office
Office européen des brevets

(11) **EP 4 425 868 A1**

(12) **EUROPEAN PATENT APPLICATION**
published in accordance with Art. 153(4) EPC

(43) Date of publication:
**04.09.2024 Bulletin 2024/36**

(51) International Patent Classification (IPC):
***H04L 41/12*** *(2022.01)*

(21) Application number: **22897722.9**

(52) Cooperative Patent Classification (CPC):
**H04L 41/12**

(22) Date of filing: **18.11.2022**

(86) International application number:
**PCT/CN2022/132880**

(87) International publication number:
**WO 2023/093639 (01.06.2023 Gazette 2023/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.11.2021 CN 202111395863**

(71) Applicant: **Huawei Technologies Co., Ltd.
Shenzhen, Guangdong 518129 (CN)**

(72) Inventors:
• **WU, Zhuliang
  Shenzhen, Guangdong 518129 (CN)**
• **WANG, Zhongyu
  Shenzhen, Guangdong 518129 (CN)**
• **XIE, Yuming
  Shenzhen, Guangdong 518129 (CN)**

(74) Representative: **Pfenning, Meinig & Partner mbB
Patent- und Rechtsanwälte
Theresienhöhe 11a
80339 München (DE)**

(54) **METHOD AND APPARATUS FOR RESTORING NETWORK TOPOLOGY**

(57)      A method for restoring a network topology and an apparatus are disclosed, and belong to the communication field. The method includes: A topology computing apparatus obtains MAC entries of a plurality of network devices; determines a port on which an uplink destination MAC address is learned as an uplink port of the plurality of network devices, where the uplink destination MAC address is a MAC address that appears most frequently in the MAC entries of the plurality of network devices; then determines a plurality of initial sets, and determines a connection relationship between the plurality of network devices based on the plurality of initial sets; and finally determines, based on the connection relationship between the plurality of network devices and the uplink port, a network topology corresponding to the plurality of network devices. The plurality of initial sets are in a one-to-one correspondence with a plurality of downlink destination MAC addresses, and the plurality of downlink destination MAC addresses include MAC addresses learned on ports other than the uplink port. The initial set includes data of the network device, and the data of the network device includes an identifier of the network device and a port on which the downlink destination MAC address is learned.

S701 — Obtain content of MAC tables of a plurality of network devices

S702 — Determine a port on which an uplink destination MAC address is learned as an uplink port of the plurality of network devices

S703 — Determine a plurality of initial sets, where the plurality of initial sets are in a one-to-one correspondence with a plurality of downlink destination MAC addresses

S704 — Determine a connection relationship between the plurality of network devices based on the plurality of initial sets

S705 — Determine, based on the connection relationship between the plurality of network devices and the uplink port, a network topology corresponding to the plurality of network devices

FIG. 7

**Description**

This application claims priority to Chinese Patent Application No. 202111395863.X, filed with the China National Intellectual Property Administration on November 23, 2021 and entitled "METHOD FOR RESTORING NETWORK TOPOLOGY AND APPARATUS", which is incorporated herein by reference in its entirety.

**TECHNICAL FIELD**

This application relates to the communication field, and in particular, to a method for restoring a network topology and an apparatus.

**BACKGROUND**

A network topology may describe a connection relationship between nodes in a network, and facilitate service deployment and troubleshooting. Specifically, the network topology may be classified into a logical topology and a physical topology.

The logical topology describes a connection relationship of a network layer or Layer 3. Logical topology restoration is to discover connection relationships between routers and between a router and each subnet. The physical topology describes a connection relationship of a link layer or Layer 2. Physical topology restoration is to discover actual connection relationships between switches, between a switch and a host, between a switch and a router, and the like.

The physical topology restoration is mainly implemented based on a link layer discovery protocol (Link Layer Discovery Protocol, LLDP) or a Cisco discovery protocol (Cisco Discovery Protocol, CDP). However, some nodes in a live network may not support the LLDP or the CDP, or the LLDP or the CDP is disabled by default. Consequently, the network topology cannot be restored.

**SUMMARY**

This application provides a method for restoring a network topology and an apparatus, to restore the network topology based on a media access control (Media Access Control, MAC) table, and improve usability and efficiency of topology restoration.

According to a first aspect, a method for restoring a network topology is provided. The method may be performed by a topology computing apparatus. The topology computing apparatus obtains MAC tables of a plurality of network devices, determines a port on which an uplink destination MAC address is learned as an uplink port of the plurality of network devices, determines a plurality of initial sets, determines a connection relationship between the plurality of network devices based on the plurality of initial sets, and determines, based on the connection relationship between the plurality of network devices and the uplink port of the plurality of network devices, a network topology corresponding to the plurality of network devices.

The uplink destination MAC address is a MAC address that appears most frequently in the MAC tables of the plurality of network devices. The plurality of initial sets are in a one-to-one correspondence with a plurality of downlink destination MAC addresses. The plurality of downlink destination MAC addresses include MAC addresses learned on ports other than the uplink port. Each of the plurality of initial sets includes data of a network device that learns a corresponding downlink destination MAC address. The data of the network device includes an identifier of the network device and a port on which the corresponding downlink destination MAC address is learned.

In this application, the network topology is restored based on the MAC table of the network device. In addition, in a process of restoring the network topology, the topology computing apparatus may directly determine the uplink port of the network device based on the MAC table of the network device, without depending on another protocol or external input, so that external dependency is reduced and usability of topology restoration is improved. In addition, the connection relationship between the plurality of network devices may be obtained based on the plurality of initial sets. In comparison with a current technology, when a connection relationship between every two network devices is calculated, all MAC addresses learned on ports do not need to be compared, so that efficiency of the topology restoration is improved.

With reference to the first aspect, in a first possible implementation of the first aspect, the connection relationship includes: two interconnected network devices in the plurality of network devices, a network device located at an upper layer and a network device located at a lower layer in the two interconnected network devices, and a downlink port of the network device located at the upper layer.

With reference to the first aspect or the first possible implementation of the first aspect, in a second possible implementation of the first aspect, an upper-layer network device and a lower-layer network device in the plurality of network devices are connected. The upper-layer network device is located at an upper layer of the lower-layer network device. Data of the upper-layer network device appears most frequently in the plurality of initial sets. A port included in the data of the upper-layer network device is a downlink port of the upper-layer network device. Data of the lower-layer network device and the data of the upper-layer network device are located in a same initial set.

This implementation may be applicable to a scenario in which a network device at a lowest layer is connected to a plurality of terminals. Based on the implementation, the connection relationship between the network devices can be determined by simply analyzing the initial set obtained based on the MAC table, so that computing efficiency is improved.

With reference to the first aspect or the first possible implementation of the first aspect, in a third possible implementation of the first aspect, the upper-layer network device and the lower-layer network device in the plurality of network devices are connected. The upper-layer network device is located at the upper layer of the lower-layer network device. An identifier of the upper-layer network device appears most frequently in the plurality of initial sets. The port included in the data of the upper-layer network device is the downlink port of the upper-layer network device. The data of the lower-layer network device and the data of the upper-layer network device are located in a same initial set.

This implementation may be applicable to a scenario in which the network device at the lowest layer is connected to one terminal. Based on the implementation, the connection relationship between the network devices can be determined by simply analyzing the initial set obtained based on the MAC table, so that the computing efficiency is improved.

With reference to the second or the third possible implementation of the first aspect, in a fourth possible implementation of the first aspect, the upper-layer network device includes a first upper-layer network device and a second upper-layer network device, and the lower-layer network device is dual-homed to the first upper-layer network device and the second upper-layer network device.

Based on the implementation, in a process of topology calculation, new networking may be applied, without depending on a single-root assumption of a tree network. For example, a network topology of dual-homed networking may be restored, so that adaptability of the topology restoration is improved.

With reference to the fourth possible implementation of the first aspect, in a fifth possible implementation of the first aspect, a topology restoration apparatus obtains indication information. The indication information indicates that the first upper-layer network device and the second upper-layer network device belong to a same multichassis link aggregation group (multichassis link aggregation group, MLAG) or a same virtual router redundancy protocol (Virtual Router Redundancy Protocol, VRRP) group.

Based on the implementation, the topology computing apparatus can identify a dual-homed networking scenario, to restore the network topology of the dual-homed networking, so that applicability of the topology restoration is improved.

With reference to the first aspect or the first possible implementation of the first aspect, in a sixth possible implementation of the first aspect, when the plurality of network devices lack the MAC tables, the topology computing apparatus sends a packet to at least one network device in the plurality of network devices.

Based on the implementation, in a scenario in which the plurality of network devices lack the MAC tables, for example, in a scenario in which all MAC tables are aged or no traffic exists in networking, the network topology can also be restored.

With reference to any one of the first aspect or the foregoing possible implementations of the first aspect, in a seventh possible implementation of the first aspect, a topology display apparatus displays the network topology corresponding to the plurality of network devices.

Based on the implementation, the network topology can be displayed vividly, so that an administrator can intuitively and quickly learn about a connection status between the network devices, to save time for subsequent processing such as service deployment or fault locating.

According to a second aspect, a topology computing apparatus is provided. The topology computing apparatus is configured to implement the method according to any one of the first aspect or the implementations of the first aspect. The topology computing apparatus includes a corresponding module, unit, or means (means) for implementing the foregoing method. The module, unit, or means may be implemented by hardware, software, or hardware executing corresponding software. The hardware or software includes one or more modules or units corresponding to the foregoing functions.

The topology computing apparatus may include an obtaining module and a determining module. The obtaining module may be configured to implement an obtaining function according to any one of the first aspect or the implementations of the first aspect. The determining module may be configured to implement a determining function according to any one of the first aspect or the implementations of the first aspect.

Further, the topology computing apparatus may further include a sending module and/or a display module, where the sending module may be configured to implement a sending function according to any one of the first aspect or the implementations of the first aspect; and the display module may be configured to implement a display function according to any one of the first aspect or the implementations of the first aspect.

With reference to the second aspect, in a first possible implementation of the second aspect, the obtaining module is configured to obtain media access control MAC tables of a plurality of network devices, and the determining module is configured to determine a port on which an uplink destination MAC address is learned as an uplink port of the plurality of network devices. The uplink destination MAC address is a MAC address that appears most frequently in the MAC tables of the plurality of network devices.

The determining module is further configured to determine a plurality of initial sets. The plurality of initial sets are in a one-to-one correspondence with a plurality of downlink destination MAC addresses. The plurality of downlink destination MAC addresses include MAC addresses learned on ports other than the uplink port. Each of the plurality of initial sets includes data of a network device that learns a corresponding downlink destination MAC address. The data of the network device includes an identifier of the network device and a port on which the corresponding downlink destination MAC address is learned.

The determining module is further configured to: determine a connection relationship between the plurality of network devices based on the plurality of initial sets, and determine, based on the connection relationship between the plurality of network devices and the uplink port of the plurality of network devices, a network topology corresponding to the plurality of network devices.

With reference to the second aspect or the first possible implementation of the second aspect, in a second possible implementation of the second aspect, the connection relationship includes: two interconnected network devices in the plurality of network devices, a network device located at an upper layer and a network device located at a lower layer in the two interconnected network devices, and a downlink port of the network device located at the upper layer.

With reference to any one of the second aspect or the foregoing possible implementations of the second aspect, in a third possible implementation of the second aspect, an upper-layer network device and a lower-layer network device in the plurality of network devices are connected, the upper-layer network device is located at an upper layer of the lower-layer network device, and data of the upper-layer network device appears most frequently in the plurality of initial sets. A port included in the data of the upper-layer network device is a downlink port of the upper-layer network device. Data of the lower-layer network device and the data of the upper-layer network device are located in a same initial set.

With reference to any one of the second aspect or the foregoing possible implementations of the second aspect, in a fourth possible implementation of the second aspect, the upper-layer network device and the lower-layer network device in the plurality of network devices are connected, the upper-layer network device is located at the upper layer of the lower-layer network device, and an identifier of the upper-layer network device appears most frequently in the plurality of initial sets. The port included in the data of the upper-layer network device is the downlink port of the upper-layer network device. The data of the lower-layer network device and the data of the upper-layer network device are located in a same initial set.

With reference to the third or the fourth possible implementation of the second aspect, in a fifth possible implementation of the second aspect, the upper-layer network device includes a first upper-layer network device and a second upper-layer network device, and the lower-layer network device is dual-homed to the first upper-layer network device and the second upper-layer network device.

With reference to the fifth possible implementation of the second aspect, in a sixth possible implementation of the second aspect, the obtaining module is further configured to obtain indication information. The indication information indicates that the first upper-layer network device and the second upper-layer network device belong to a same MLAG or a same VRRP group.

With reference to the second aspect or the first or the second possible implementation of the second aspect, in a seventh possible implementation of the second aspect, the sending module is configured to: when the plurality of network devices lack the MAC tables, send a packet to at least one network device in the plurality of network devices.

With reference to any one of the second aspect or the foregoing possible implementations of the second aspect, in a third possible implementation of the second aspect, the display module is configured to display the network topology corresponding to the plurality of network devices.

According to a third aspect, a communication apparatus is provided. The communication apparatus includes a processor and a memory. The memory is configured to store computer instructions. When the processor executes the instructions, the communication apparatus is enabled to perform the method according to any one of the foregoing aspects. The communication apparatus may be the foregoing topology computing apparatus, or a device including the foregoing topology computing apparatus, or an apparatus, such as a chip, included in the foregoing topology computing apparatus.

According to a fourth aspect, a communication apparatus is provided. The communication apparatus includes a processor and a communication interface. The communication interface is configured to communicate with a module other than the communication apparatus. The processor is configured to: execute a computer program or instructions, so that the communication apparatus performs the method according to any one of the foregoing aspects. The communication apparatus may be the foregoing topology computing apparatus, or a device including the foregoing topology computing apparatus, or an apparatus, such as a chip, included in the foregoing topology computing apparatus.

According to a fifth aspect, a communication apparatus is provided. The communication apparatus includes an interface circuit and a processor. The interface circuit is a code/data read/write interface circuit, and the interface circuit is configured to: receive computer-executable instructions (where the computer-executable instructions are stored in a memory, may be directly read from the memory, or may be read by another component), and transmit the computer-executable instructions to the processor. The processor is configured to: execute the computer-executable instructions, so that the communication apparatus performs the method according to any one of the foregoing aspects. The communication apparatus may be the foregoing topology computing apparatus, or a device including the foregoing topology computing apparatus, or an apparatus, such as a chip, included in the foregoing topology computing apparatus.

According to a sixth aspect, a communication apparatus is provided. The communication apparatus includes at least one processor. The processor is configured to: execute a computer program or instructions, so that the communication apparatus performs the method according to any one of the foregoing aspects. The communication apparatus may be the foregoing topology computing apparatus, or a device including the foregoing topology computing apparatus, or an apparatus, such as a chip, included in the foregoing topology computing apparatus.

In a possible design, the communication apparatus further includes a memory. The memory is configured to store necessary program instructions and necessary data. The memory may be coupled to the processor, or may be independent of the processor.

In a possible design, the communication apparatus is a chip or a chip system. When the apparatus is the chip system, the apparatus may include a chip, or may include a chip and another discrete component.

According to a seventh aspect, a computer-readable storage medium is provided. The computer-readable storage medium stores instructions. When the instructions are run on a communication apparatus, the communication apparatus is enabled to perform the method according to any one of the foregoing aspects.

According to an eighth aspect, a computer program product including instructions is provided. When the computer program product runs on a communication apparatus, the communication apparatus is enabled to perform the method according to any one of the foregoing aspects.

For technical effects brought by any implementation of the second aspect to the eighth aspect, refer to technical effects brought by corresponding implementations of the first aspect. Details are not described herein again.

## BRIEF DESCRIPTION OF DRAWINGS

FIG. 1 is a schematic diagram of a network topology of hierarchical networking according to an embodiment of this application;
FIG. 2 is a schematic diagram of a network topology of chain networking according to an embodiment of this application;
FIG. 3 is a schematic diagram of a network topology of HUB networking according to an embodiment of this application;
FIG. 4 is a schematic diagram of a network topology of dual-homed networking according to an embodiment of this application;
FIG. 5 is a schematic diagram of a connection relationship between network devices according to an embodiment of this application;
FIG. 6 is a schematic diagram of an architecture of a communication system according to an embodiment of this application;
FIG. 7 is a schematic flowchart of a method for restoring a network topology according to an embodiment of this application;
FIG. 8 is a schematic diagram of traffic aggregation in networking according to an embodiment of this application;
FIG. 9 is a schematic diagram of a network topology according to an embodiment of this application;
FIG. 10 is a schematic diagram of traffic aggregation in other networking according to an embodiment of this application;
FIG. 11 is a schematic diagram of another network topology according to an embodiment of this application;
FIG. 12 is a schematic diagram of another network topology according to an embodiment of this application;
FIG. 13 is a schematic diagram of another network topology according to an embodiment of this application;
FIG. 14 is a schematic diagram of another network topology according to an embodiment of this application;
FIG. 15 is a schematic diagram of another network topology according to an embodiment of this application;
FIG. 16 is a schematic diagram of another network topology according to an embodiment of this application;
FIG. 17 is a schematic diagram of another network topology according to an embodiment of this application;
FIG. 18 is a schematic diagram of another network topology according to an embodiment of this application;
FIG. 19 is a schematic diagram of a structure of a topology computing apparatus according to an embodiment of this application; and
FIG. 20 is a schematic diagram of a structure of a communication apparatus according to an embodiment of this application.

## DESCRIPTION OF EMBODIMENTS

In descriptions of this application, unless otherwise specified, "/" represents an "or" relationship between associated objects. For example, A/B may represent A or B. In this application, "and/or" describes only an association relationship for describing associated objects and represents that three relationships may exist. For example, A and/or B may represent the following three cases: Only A exists, both A and B exist, and only B exists, where A and B may be singular or plural.

In the descriptions of this application, unless otherwise specified, "a plurality of" means two or more than two. At least one of the following items (pieces) or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In embodiments of this application, a word "example", "for example", or the like is used to represent giving an example, or a description. Any embodiment or solution design described as an "example" or "for example" in embodiments of this application should not be explained as being more preferred or having more advantages than another embodiment or solution design. Exactly, use of the word such as "example" or "for example" is intended to present a relative concept in a specific manner for ease of understanding.

It may be understood that "an embodiment" mentioned in the entire specification means that particular features, structures, or characteristics related to the embodiment are included in at least one embodiment of this application. Therefore, embodiments in the entire specification do not necessarily refer to a same embodiment. In addition, the particular features, structures, or characteristics may be combined in one or more embodiments by using any appropriate manner. It may be understood that sequence numbers of the processes do not mean execution sequences in various embodiments of this application. The execution sequences of the processes should be determined based on functions and internal logic of the processes, and should not be construed as any limitation on the implementation processes of embodiments of this application.

It may be understood that, in this application, "when" and "if" mean that corresponding processing is performed in an objective situation, are not intended to limit time, do not require a determining action during implementation, and do not mean any other limitation.

It may be understood that, in some scenarios, some optional features in embodiments of this application may be independently implemented without depending on another feature, for example, a solution on which the optional features are currently based, to resolve a corresponding technical problem and achieve a corresponding effect. Alternatively, in some scenarios, the optional features are combined with another feature based on requirements. Correspondingly, an apparatus provided in embodiments of this application may also correspondingly implement the features or functions. Details are not described herein.

In this application, unless otherwise specified, for same or similar parts of the embodiments, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The following implementations of this application are not intended to limit the protection scope of this application.

It should be noted that, in embodiments of this application, unless otherwise specified, a topology is a physical topology, and topology restoration is physical topology restoration. Unified descriptions are provided herein, and details are not described in subsequent embodiments.

If a network device does not support an LLDP or a CDP, or the LLDP or the CDP is disabled, an LLDP-based or CDP-based method for restoring a topology cannot restore a network topology. Therefore, in embodiments of this application, the physical topology restoration is performed based on a media access control (Media Access Control, MAC) address.

The topology restoration based on the MAC address is mainly used in the following four typical networking, or the topology restored based on the MAC address mainly includes the following four typical networking topologies:

(1) Hierarchical networking:

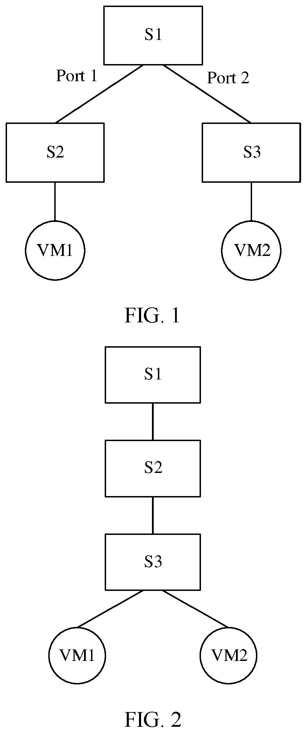

The hierarchical networking is common networking of a convergence node on a campus network. For example, a network topology of the hierarchical networking may be shown in FIG. 1. A virtual machine (virtual machine, VM) 1 accesses a network through a switch (switch, S) 2, a VM2 accesses the network through an S3, and the S2 and the S3 converge at an S1.

On the network, the higher the layer, the higher the forwarding performance of the switch. The lower the layer, the higher the access capability of the switch. The network usually has a hierarchical structure of "core-convergence-access".

(2) Chain networking:

The chain networking is common networking of an edge node on the campus network. For example, a network topology of the chain networking may be shown in FIG. 2. An S3, an S2, and an S1 form a chain structure, and a VM1 and a VM2 access a network through the S3. The chain networking enables the network to cover a large area with low costs, for example, an area with low traffic and few terminals.

(3) Hub (HUB) networking:

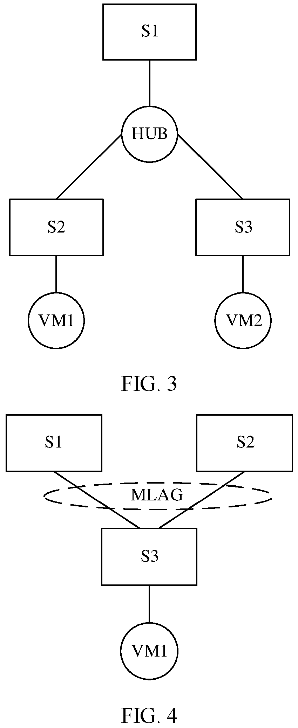

For example, a network topology of the HUB networking may be shown in FIG. 3. It may be found through topology restoration that one port (port) of an S1 on the networking is connected to two devices: an S2 and an S3. This does not comply with a normal situation that one port is connected to one device. Therefore, the three devices may be connected through the HUB.

(4) Dual-homed networking:

For example, a network topology of the dual-homed networking may be shown in FIG. 4. To enhance network reliability, an S3 is dual-homed to an S1 and an S2. When one of the S1 and the S2 fails, the S3 can quickly switch traffic to another device.

Generally, the dual-homed networking may be implemented by using a multichassis link aggregation group (multichassis link aggregation group, MLAG) protocol or a virtual router redundancy protocol (Virtual Router Redundancy Protocol, VRRP). FIG. 4 shows an example in which the dual-homed networking is implemented by using the MLAG.

The MLAG is a mechanism that implements inter-device link aggregation, and perform link aggregation between one device and two other devices, to improve link reliability from a board level to a device level and form an active-active system. The VRRP can combine a plurality of routing devices into a virtual routing device and use an Internet protocol (Internet Protocol, IP) address of the virtual routing device as a default gateway to communicate with an external network.

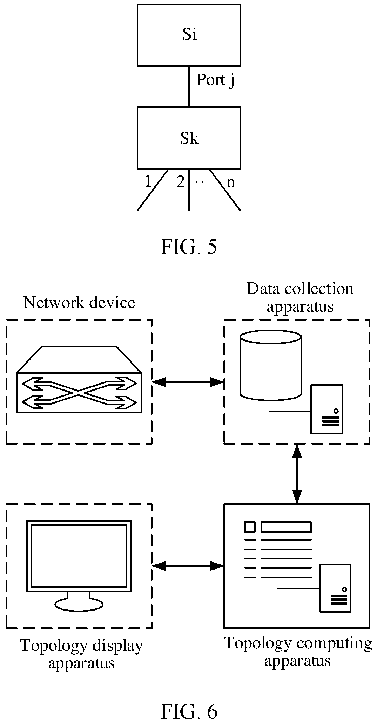

In a possible implementation, a solution for performing topology restoration based on the MAC address includes: determining, based on a MAC table of a downlink port of a switch, a MAC address of another switch connected to the downlink port, and MAC tables of all downlink ports of the another switch, a connection layer of the two connected switches. As shown in FIG. 5, if a MAC table on a downlink port (port j) of a switch Si includes a MAC address of a switch Sk and MAC addresses in MAC tables on all downlink ports (port 1, port 2, ..., port n) of the Sk, it is determined that the downlink port of the Si is directly connected to an uplink port of the Sk.

The uplink port of the Sk may be determined by using a spanning tree protocol (Spanning Tree Protocol, STP), an address resolution protocol (Address Resolution Protocol, ARP), or the like. A relationship between the MAC table on the downlink port of the Si and the MAC table of the Sk may be expressed as the following formula (1):

$$A_{ij} = \bigcup_{n=1}^{N} A_{kn} \bigcup \{S_k\} \quad (1)$$

where N is a total quantity of the downlink ports of the Sk, $A_{ij}$ represents a set of MAC addresses included in the MAC table on the downlink port j of the Si, $A_{kn}$ represents a set of MAC addresses included in the MAC table on the downlink port n of the Sk, and $S_k$ represents the MAC address of the Sk.

For example, an example in which N is equal to 3 is used. If the MAC addresses included in the MAC tables on the port 1, port 2, and port 3 of the Sk are shown in Table 1, the MAC address of the Sk is MAC#Sk. If the MAC addresses included in the MAC table on the downlink port j of the Si are shown in Table 2, the downlink port j of the Si is directly connected to the uplink port of the Sk.

**Table 1**

| MAC address | Port |
|---|---|
| MAC#1 | Port 1 |
| MAC#2 | Port 2 |
| MAC#3 | Port 3 |

**Table 2**

| MAC address | Port |
|---|---|
| MAC#1 | Port j |
| MAC#2 | Port j |
| MAC#3 | Port j |
| MAC#Sk | Port j |

In the foregoing implementation, a root switch (for example, the Si) needs to be determined first, an uplink port of another switch (for example, the Sk) needs to be marked, and then a connection relationship between the switches is determined. The marking of the uplink port depends on other protocols such as the STP or the ARP or external configuration. The uplink port needs to be marked in advance. This increases coupling between the solution and the outside, and reduces usability of the solution. The root switch needs to be determined first. Consequently, the solution cannot be adaptively applied to protection networking, for example, dual-root networking or multi-root networking.

Based on this, a method for restoring a network topology is provided in this application. In the method, the uplink port can be marked automatically based on the MAC address. This improves applicability and the usability of the solution.

Embodiments of this application may be applied to a communication system shown in FIG. 6. As shown in FIG. 6, the communication system includes a topology computing apparatus, where the topology computing apparatus is configured to restore a network topology corresponding to a plurality of network devices.

Optionally, the communication system may further include a network device, a data collection apparatus, and a topology display apparatus. The data collection apparatus is configured to collect related data in the network device. The topology display apparatus is configured to display the network topology.

Optionally, the network device may have a function of performing packet forwarding (or information exchange) based on a MAC address. For example, the network device may be a switch. For example, in this application, the network device may implement the following functions:

(1) The device searches for a MAC table based on a destination MAC address of a packet and forwards the packet, and the device also learns a source MAC address of the packet and generates a MAC table.
(2) The device performs MLAG configuration or VRRP configuration, to implement dual-homed networking. In the MLAG configuration, the network device may perform neighbor relationship negotiation based on an MLAG identifier (identifier, ID). In the VRRP configuration, the network device may perform neighbor relationship negotiation based on a VRRP-ID. It should be noted that the function is optional. To be specific, the network device may not perform MLAG configuration or VRRP configuration.
(3) The device configures a virtual local area network interface (Virtual Local Area Network Interface, VLANIF). When configuring the VLANIF, the network device can automatically generate a MAC address (referred to as a system MAC address) corresponding to the VLANIF. The system MAC address may be used as the source MAC address used when the network device sends the packet.

The topology display apparatus and the topology computing apparatus may be integrated into one device, or the topology display apparatus and the topology computing apparatus may be respectively disposed in two different devices. The data collection apparatus and the topology computing apparatus may be integrated into one device, or the data collection apparatus and the topology computing apparatus may be respectively disposed in two different devices. The data collection apparatus, the topology computing apparatus, and the topology display apparatus may be integrated into one device, or the three may be respectively disposed in three different devices. This is not specifically limited in this application.

Optionally, cloud-based network management is used as an example. The topology computing apparatus and the topology display apparatus may be deployed on a cloud, and the data collection apparatus may be deployed in an equipment room along with the network device.

The following describes in detail the method provided in embodiments of this application with reference to the accompanying drawings. To make the following descriptions clearer, some concepts mentioned in embodiments of this application are first briefly described.

Uplink: a transmission direction from a terminal to a network (or an application server).

Downlink: a transmission direction from the network (or the application server) to the terminal.

Uplink port: an egress port in the uplink direction or an ingress port in the downlink direction.

Downlink port: an egress port in the downlink direction or an ingress port in the uplink direction.

An upper-layer and a lower-layer relationship of the network device is defined as follows: In an uplink data transmission process, a network device that first forwards data is located at a lower layer of a network device that forwards the data later. Alternatively, in a downlink data transmission process, a network device that first forwards data is located at an upper layer of a network device that forwards the data later.

It should be noted that the uplink port in this application may also be referred to as an uplink port or an upper transmission port, and the names may be replaced with each other. This is not limited. The downlink port in this application may also be referred to as a downlink port or a lower transmission port, and the names may be replaced with each other. This is not limited.

In a possible implementation, the application server may be implemented in a form of a terminal. In other words, an application may be deployed on the terminal, where the terminal on which the application is deployed may be referred to as the application server.

In the accompanying drawings of this application, an example in which the terminal is a VM is used for description. It is clear that a type of the terminal is not specifically limited in this application. For example, the terminal may be various handheld devices, vehicle-mounted devices, wearable devices, Internet of things (internet of things, IoT) devices, or computing devices that have a wireless communication function, or other processing devices connected to a wireless modem, or user equipment (user equipment, UE) in various forms.

It may be understood that an execution body may perform a part or all of the steps in embodiments of this application. The steps or operations are merely examples. In embodiments of this application, other operations or variations of various operations may be further performed. In addition, the steps may be performed in a sequence different from a sequence presented in embodiments of this application, and not all the operations in embodiments of this application may be performed.

It should be noted that a name of each information, parameter, device, or the like in the following embodiments of this application is merely an example, and another name may be used in a specific implementation. This is not specifically limited in this embodiment of this application.

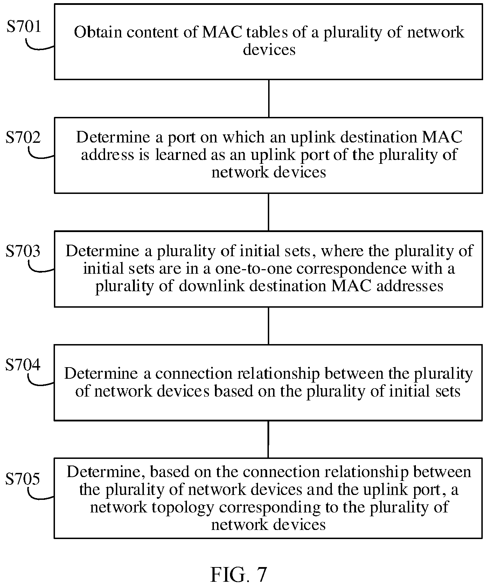

FIG. 7 is a flowchart of a method for restoring a network topology according to an embodiment of this application. The method for restoring the network topology may be implemented by a topology computing apparatus, and the method includes the following steps.

S701: Obtain content of MAC tables of a plurality of network devices.

Optionally, the plurality of network devices are a plurality of network devices in a same virtual local area network (virtual local area network, VLAN). The MAC table of each network device may include a MAC table on each port of the network device.

S702: Determine a port on which an uplink destination MAC address is learned as an uplink port of the plurality of network devices. The uplink destination MAC address is a MAC address that appears most frequently in the MAC tables of the plurality of network devices.

Optionally, the uplink destination MAC address may be a MAC address of a gateway device (for example, a router), and a terminal is connected to the gateway device through the plurality of network devices (for example, switches) to access a network. Alternatively, the uplink destination MAC address may be a MAC address of an application server on which an application is deployed.

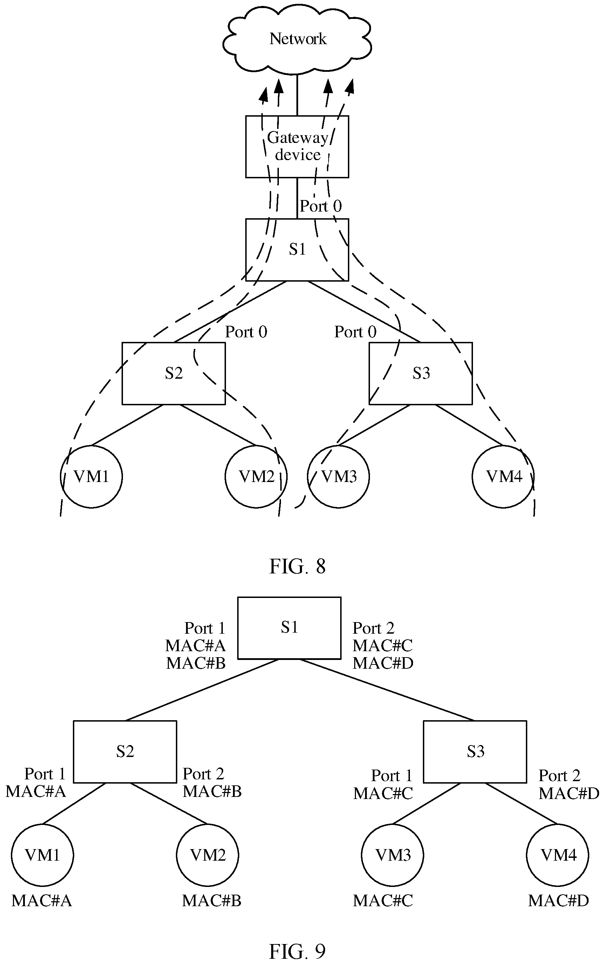

In a specific example, as shown in FIG. 8, terminals (a VM1 to a VM4) are connected to a gateway device through an S1 to access a network. In an uplink direction, data sent by the VM1, the VM2, the VM3, and the VM4 is sent to the gateway device through the S1, and then the gateway device sends the data to the network. In a downlink direction, when the network sends corresponding responses (or data) to the VM1, the VM2, the VM3, and the VM4, the responses are first sent to the gateway device, and then the gateway device sends the responses to the S1. The S1 sends the responses to be sent to the VM1 and the VM2 to an S2, and the S2 sends the responses to the VM1 and the VM2. The S1 sends the responses to be sent to the VM3 and the VM4 to an S3, and the S3 sends the responses to the VM3 and the VM4.

In downlink transmission corresponding to the process shown in FIG. 8, a source MAC address of the response sent by the gateway device to each VM is a MAC address of the gateway device. When receiving the response from the gateway device, the S 1 may learn the MAC address of the gateway device on a port 0. Similarly, when the S2 and the S3 receive the response from the S 1, because the source MAC address of the response is still the MAC address of the gateway device, the S2 and the S3 may learn the MAC address of the gateway device on respective ports 0.

In uplink transmission shown in FIG. 8, it is assumed that a MAC address of the VM1 is MAC#A, a MAC address of the VM2 is MAC#B, a MAC address of the VM3 is MAC#C, and a MAC address of the VM4 is MAC#D. MAC addresses learned on other ports of the S 1, the S2, and the S3 may be shown in FIG. 9.

To be specific, with reference to the MAC addresses learned in the downlink transmission, MAC tables of the S 1, the S2, and the S3 may be respectively shown in Table 3, Table 4, and Table 5. MAC#G indicates the MAC address of the gateway device.

**Table 3**

| MAC address | Port |
| --- | --- |
| MAC#A | Port 1 |
| MAC#B | Port 1 |
| MAC#C | Port 2 |
| MAC#D | Port 2 |
| MAC#G | Port 0 |

**Table 4**

| MAC address | Port |
| --- | --- |
| MAC#A | Port 1 |
| MAC#B | Port 2 |
| MAC#G | Port 0 |

**Table 5**

| MAC address | Port |
| --- | --- |
| MAC#C | Port 1 |
| MAC#D | Port 2 |
| MAC#G | Port 0 |

With reference to Table 3, Table 4, and Table 5, MAC#G appears most frequently in the three MAC tables, so that MAC#G is an uplink destination MAC address. Ports on which MAC#G is learned are the ports 0 of the S1, the S2, and the S3. Therefore, an uplink port of the S1, an uplink port of the S2, and an uplink port of the S3 are the respective ports 0.

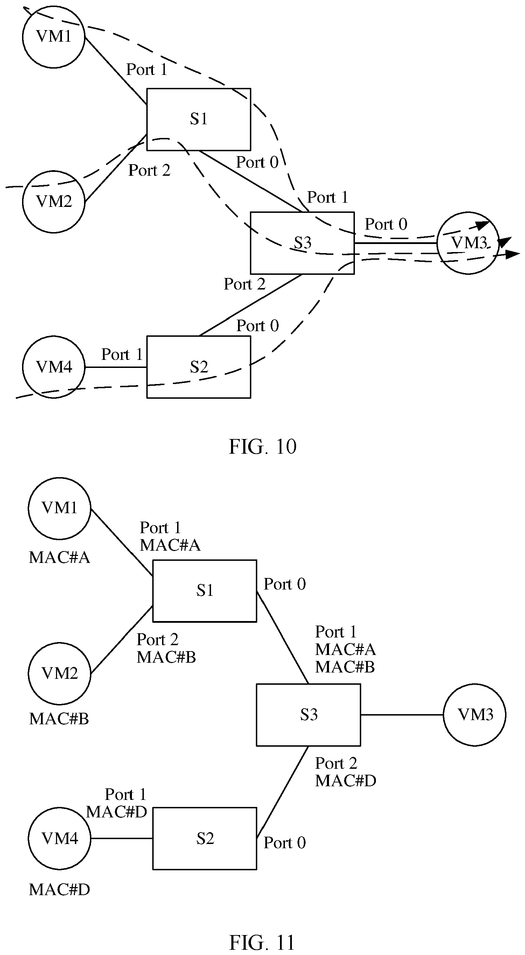

In another specific example, as shown in FIG. 10, it is assumed that an application is deployed on a VM3. In other words, the VM3 may be used as an application server. In an uplink direction, data sent by a VM1 and a VM2 is sequentially sent to the VM3 through an S1 and an S3, and data sent by a VM4 is sequentially sent to the VM3 through the S1 and the S3. In a downlink direction, when the VM3 sends corresponding responses (or data) to the VM1 and the VM2, the responses sequentially pass through the S3 and the S1 and arrive at the VM1 and the VM2, and the response sent by the VM3 to the VM4 sequentially passes through the S3 and an S2 and arrives at the VM4.

In downlink transmission corresponding to the process shown in FIG. 10, a source MAC address of the response sent by the VM3 is a MAC address of the VM3. When receiving the response from the VM3, the S3 may learn the MAC address of the VM3 on a port 0. Similarly, when the S1 and the S2 receive the responses from the S3, because the source MAC addresses of the responses are still the MAC address of the VM3, the S1 and the S2 may learn the MAC address of the VM3 on respective ports 0.

In uplink transmission shown in FIG. 10, it is assumed that a MAC address of the VM1 is MAC#A, a MAC address of the VM2 is MAC#B, a MAC address of the VM3 is MAC#C, and a MAC address of the VM4 is MAC#D. MAC addresses learned on other ports of the S1, the S2, and the S3 may be shown in FIG. 11.

To be specific, with reference to the MAC addresses learned in the downlink transmission, MAC tables of the S1, the S2, and the S3 may be respectively shown in Table 6, Table 7, and Table 8.

**Table 6**

| MAC address | Port |
|---|---|
| MAC#A | Port 1 |
| MAC#B | Port 2 |
| MAC#C | Port 0 |

**Table 7**

| MAC address | Port |
|---|---|
| MAC#D | Port 1 |
| MAC#C | Port 0 |

**Table 8**

| MAC address | Port |
|---|---|
| MAC#C | Port 0 |
| MAC#A | Port 1 |
| MAC#B | Port 1 |
| MAC#D | Port 2 |

With reference to Table 6, Table 7, and Table 8, MAC#C appears most frequently in the three MAC tables, so that MAC#C is an uplink destination MAC address. Ports on which MAC#C is learned are the ports 0 of the S1, the S2, and the S3. Therefore, an uplink port of the S1, an uplink port of the S2, and an uplink port of the S3 are the respective ports 0.

S703: Determine a plurality of initial sets.

The plurality of initial sets are in a one-to-one correspondence with a plurality of downlink destination MAC addresses. The plurality of downlink destination MAC addresses include MAC addresses learned on ports other than the foregoing uplink ports. For example, based on the example shown in FIG. 9, the plurality of downlink destination MAC addresses are MAC#A, MAC#B, MAC#C, and MAC#D, including MAC addresses learned on the ports 1 and 2 of the S1, the S2, and the S3.

Each initial set (set) of the plurality of initial sets includes data of a network device that learns a corresponding downlink destination MAC address. The data of the network device includes an identifier of the network device and a port on which the corresponding downlink destination MAC address is learned. In an implementation, the port may be identified by using a port number.

For example, based on the example shown in FIG. 9, four initial sets corresponding to four downlink destination MAC addresses are respectively shown as follows:

set1: corresponding to the downlink destination MAC address MAC#A, and including: {S1-port 1, S2-port 1};
set2: corresponding to the downlink destination MAC address MAC#B, and including: {S1-port 1, S2-port 2};
set3: corresponding to the downlink destination MAC address MAC#C, and including: { S1-port 2, S3-port 1}; and
set4: corresponding to the downlink destination MAC address MAC#D, and including: {S1-port 2, S3-port 2}.

The set1 includes data of the S1 and data of the S2. The data of the S1 includes an identifier (represented by S1) of the S1 and the port 1 on which the corresponding downlink destination MAC address MAC#A is learned. The data of the S2 includes an identifier (represented by S2) of the S2 and the port 1 on which the corresponding downlink destination MAC address MAC#A is learned. The set1 may indicate that the downlink destination MAC address MAC#A is learned on the port 1 of the S1 and the port 1 of the S2. For descriptions of other sets, refer to the set1. Details are not described again.

S704: Determine a connection relationship between the plurality of network devices based on the plurality of initial sets.

Optionally, the connection relationship includes: two interconnected network devices in the plurality of network devices, a network device located at an upper layer and a network device located at a lower layer in the two interconnected network devices, and a downlink port of the network device located at the upper layer.

S705: Determine, based on the connection relationship between the plurality of network devices and the uplink port of the plurality of network devices, a network topology corresponding to the plurality of network devices.

Optionally, based on the connection relationship between the plurality of network devices and the uplink port of the plurality of networks, a network device located at an upper layer, a downlink port of the network device located at the upper layer, a network device located at a lower layer, and an uplink port of the network device located at the lower layer that are in any two interconnected network devices may be determined. That is, two directly connected network devices and ports connecting the two network devices may be determined. The network topology corresponding to the plurality of network devices can be restored by connecting a downlink port of an upper-layer network device and an uplink port of a lower-layer network device, where the two devices may be any two interconnected network devices.

Optionally, the upper-layer network device and the lower-layer network device in the plurality of network devices are connected, and the upper-layer network device is located at an upper layer of the lower-layer network device. Data of the upper-layer network device may be in the plurality of initial sets in the following two manners:

Manner 1: The data of the upper-layer network device appears most frequently in the plurality of initial sets. A port included in the data of the upper-layer network device is the downlink port of the upper-layer network device. Data of the lower-layer network device and the data of the upper-layer network device are located in a same initial set.

In a possible implementation, when the initial set includes data of two network devices, one of the two network devices is the upper-layer network device, the other is the lower-layer network device, and the upper-layer network device is directly connected to the lower-layer network device.

For example, based on the example shown in FIG. 9, data that appears most frequently in the plurality of initial sets are {S1-port 1} and {S1-port 2}. Therefore, the S1 is the upper-layer network device, and both the port 1 and the port 2 of the S1 are downlink ports of the S1. In addition, because the data {S2-port 1}, the data {S2-port 2}, and the data {S1-port 1} are located in a same initial set, the S2 is the lower-layer network device. Further, it may be further determined that the port 1 of the S1 is connected to an uplink port of the S2. Similarly, it may be determined that the S3 is the lower-layer network device, and the port 2 of the S1 is connected to an uplink port of the S3.

Because it may be determined, in step S702, that the uplink port of the S2 is the port 0, and the uplink port of the S3 is the port 0, it may be determined that the port 1 of the S1 is connected to the port 0 of the S2, and the port 2 of the S1 is connected to the port 0 of the S3, so that the network topology shown in FIG. 9 can be restored.

Optionally, the upper-layer network device and the lower-layer network device may be determined by performing operation such as intersection on the initial set. An intersection of at least two sets is the data that appears most frequently in the plurality of initial sets, and a network device corresponding to the data is the upper-layer network device. A network device corresponding to another piece of data than the intersection data in the initial set is the lower-layer network device.

For example, based on the example shown in FIG. 9, after the operation such as the intersection is performed on the initial set, the following result may be obtained:

set5: {S1-port 1} #intersection of the set1 and the set2;
updated set 1: {S2-port 1} #set1 after intersection data is deleted; and
updated set2: {S2-port 2} #set2 after intersection data is deleted.

It may be determined, based on the operation result, that the S1 is the upper-layer network device, the S2 is the lower-layer network device, and the port 1 of the S1 is connected to the uplink port of the S2.

set6: {S1-port 2} #intersection of the set3 and the set4;
updated set3: {S3-port 1} #set3 after intersection data is deleted; and
updated set4: {S3-port 2} #set4 after intersection data is deleted.

It may be determined, based on the operation result, that the S1 is the upper-layer network device, the S3 is the lower-layer network device, and the port 2 of the S1 is connected to the uplink port of the S3.

In another possible implementation, when the initial set includes data of at least three network devices, there may be a plurality of lower-layer network devices or a plurality of upper-layer network devices in the at least three network devices.

When there are a plurality of lower-layer network devices, data of the upper-layer network device in the initial set may be deleted, the initial set is updated, and then a connection relationship between the plurality of lower-layer network devices is determined based on an updated set.

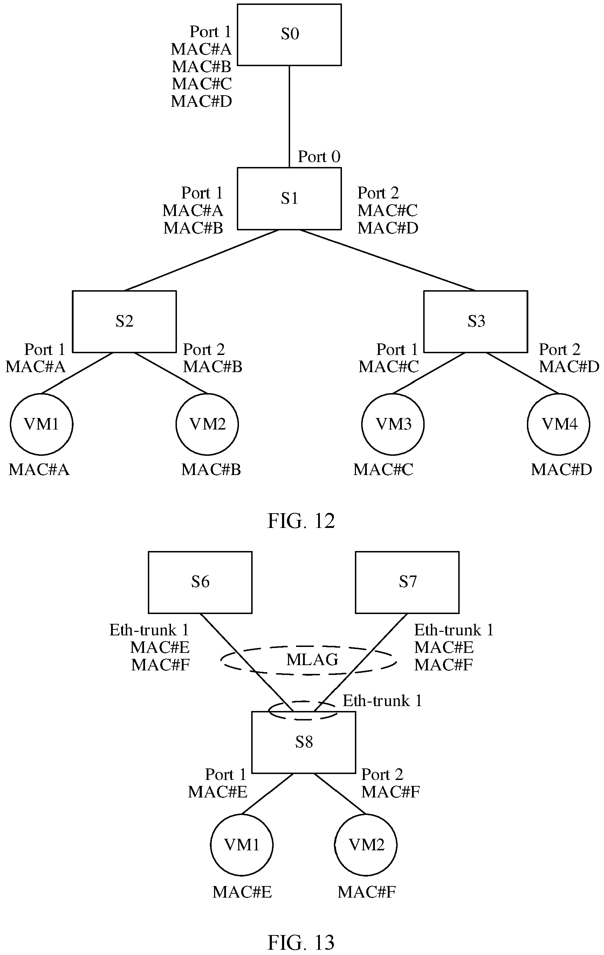

For example, as shown in FIG. 12, it is assumed that, on the basis of the topology shown in FIG. 9, the S1 is further connected to an SO, and MAC addresses of a VM1, a VM2, a VM3, and a VM4 are learned on a port 1 of the S0. In this case, a plurality of initial sets of a topology shown in FIG. 12 may be respectively shown as follows:

set1: corresponding to the downlink destination MAC address MAC#A, and including: {S0-port 1, S1-port 1, S2-port 1};
set2: corresponding to the downlink destination MAC address MAC#B, and including: {S0-port 1, S1-port 1, S2-port 2};
set3: corresponding to the downlink destination MAC address MAC#C, and including: {S0-port 1, S1-port 2, S3-port 1}; and
set4: corresponding to the downlink destination MAC address MAC#D, and including: {S0-port 1, S1-port 2, S3-port 2}.

Based on the example shown in FIG. 12, data that appears most frequently in the plurality of initial sets is {S0-port 0}. Therefore, the S0 is the upper-layer network device, the port 1 of the S0 is a downlink port of S0, and the S1 and the S2 are the lower-layer network devices. In this case, {S0-port 0} may be deleted from the initial set, to obtain updated sets as follows:

updated set1: corresponding to a downlink destination MAC address MAC#A, and including: {S1-port 1, S2-port 1};
updated set2: corresponding to a downlink destination MAC address MAC#B, and including: {S1-port 1, S2-port 2};
updated set3: corresponding to a downlink destination MAC address MAC#C, and including: {S1-port 2, S3-port 1}; and
updated set4: corresponding to a downlink destination MAC address MAC#D, and including: {S1-port 2, S3-port 2}.

Data that appears most frequently in the plurality of updated sets are {S1-port 1} and {S1-port 2}. Therefore, the S1 is located at the upper layer, and both the port 1 and the port 2 of the S1 are downlink ports of the S1. In addition, because the data {S2-port 1}, the data {S2-port 2}, the data {S1-port 1} are located in a same initial set, the S2 is located at a lower layer of the S1. Further, it may be further determined that the port 1 of the S1 is connected to an uplink port of the S2. Similarly, it may be determined that the S3 is located at the lower layer of the S1, and the port 2 of the S1 is connected to an uplink port of the S3.

Because it may be determined, in step S702, that the uplink ports of the S1, the S2, and the S3 are the respective ports 0, it may be determined that the port 1 of the S0 is connected to the port 0 of the S1, the port 1 of the S1 is connected to the port 0 of the S2, and the port 2 of the S1 is connected to the port 0 of the S3, so that the network topology shown in FIG. 12 can be restored.

Optionally, the upper-layer network device and the plurality of lower-layer network devices may be determined by performing operation such as intersection on the initial set. An intersection of the plurality of initial sets is data that appears most frequently in the plurality of initial sets, and a network device corresponding to the data is the upper-layer network device. A plurality of network devices corresponding to a plurality of pieces of data other than the intersection data in the initial set are the lower-layer network devices. Then, the data of the upper-layer network device in the initial set may be deleted, the initial set is updated, and the operation such as the intersection is performed on an updated set, to determine a connection relationship between the plurality of lower-layer network devices.

For example, based on the example shown in FIG. 12, after the operation such as the intersection is performed on the initial set, the following result may be obtained:

set5: {S0-port 1} #intersection of set1, set2, set3, and set4;
updated set1: {S1-port 1, S2-port 1} #set1 after intersection data is deleted;
updated set2: {S1-port 1, S2-port 2} #set2 after intersection data is deleted;
updated set3: {S1-port 2, S3-port 1} #set3 after intersection data is deleted; and
updated set4: {S1-port 2, S3-port 2} #set4 after intersection data is deleted.

It may be determined, based on the operation result, that the S0 is the upper-layer network device, the S1 and the S2 are the lower-layer network devices, and the port 1 of the S0 is the downlink port.

Then, the intersection operation may be performed on the updated set1, the updated set2, the updated set3, and the updated set4, to determine that the S1 is located at an upper layer of the S2 and the S3, the port 1 of the S1 is connected to an uplink port of the S2, and the port 2 of the S1 is connected to an uplink port of the S3. For details, refer to the foregoing related descriptions. Details are not described herein again.

If there are a plurality of upper-layer network devices, a dual-root or multi-root protection networking scenario may be used. For example, in the dual-root scenario, the plurality of upper-layer network devices include a first upper-layer network device and a second upper-layer network device, and the lower-layer network device is dual-homed to the first upper-layer network device and the second upper-layer network device.

Optionally, the topology computing apparatus may obtain indication information. When the indication information indicates that the first upper-layer network device and the second upper-layer network device belong to a same MLAG or a same VRRP group, the lower-layer network device is dual-homed to the first upper-layer network device and the second upper-layer network device.

For example, as shown in FIG. 13, it is assumed that an S8 is configured to be dual-homed to an S6 and an S7 by using an MLAG, downlink ports of S6 and S7 are Eth-trunks 1, the S8 is connected to a VM1 and a VM2, a MAC address of the VM1 is MAC#E, and a MAC address of the VM2 is MAC#F. Based on the example shown in FIG. 13, a plurality of initial sets may be shown as follows:

> set1: corresponding to the downlink destination MAC address MAC#E, and including: {S6-Eth-trunk 1, S7-Eth-trunk 1, S8-port 1}; and
>
> set2: corresponding to the downlink destination MAC address MAC#F, and including: {S6-Eth-trunk 1, S7-Eth-trunk 1, S8-port 2}.

In this example, data that appears most frequently in the plurality of initial sets is {S6-Eth-trunk 1, S7-Eth-trunk 1}. Therefore, the S6 and the S7 are the upper-layer network devices, and the ports Eth-trunks 1 of the S6 and the S7 are the respective downlink ports. In addition, because the data {S8-port 1}, the data {S8-port 2}, and the data {S6-Eth-trunk 1, S7-Eth-trunk 1} are located in a same initial set, the S8 is the lower-layer network device. Further, it may be further determined that the ports Eth-trunks 1 of the S6 and the S7 are connected to an uplink port of S8.

Then, because there are two upper-layer network devices: the S6 and the S7, a relationship between the S6 and the S7 needs to be further determined. In this case, MLAG or VRRP configuration of the S6 and the S7 may be checked to determine that the S6 and the S7 belong to a same MLAG or VRRP group. Therefore, it is determined that the S8 is dual-homed to the S6 and the S7.

Manner 2: An identifier of the upper-layer network device appears most frequently in the plurality of initial sets. The port included in the data of the upper-layer network device is the downlink port of the upper-layer network device. Data of the lower-layer network device and the data of the upper-layer network device are located in a same initial set.

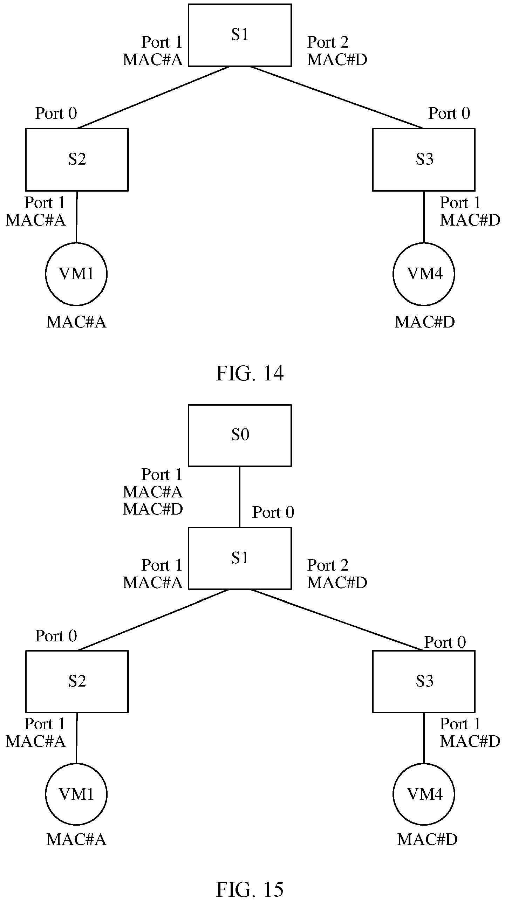

For example, as shown in FIG. 14, it is assumed that an S1 is connected to an S2 and an S3, the S2 and the S3 are respectively connected to a VM1 and a VM2, a MAC address of the VM1 is MAC#A, and a MAC address of the VM2 is MAC#D. Based on the example shown in FIG. 14, a plurality of initial sets may be shown as follows:

> set1: corresponding to the downlink destination MAC address MAC#A, and including: {S1-port 1, S2-port 1}; and
>
> set2: corresponding to the downlink destination MAC address MAC#D, and including: {S1-port 2, S3-port 1}.

In this example, an identifier of a network device that appears most frequently in the plurality of initial sets is the S1. Therefore, the S1 is the upper-layer network device, and both a port 1 and a port 2 of the S1 are downlink ports of the S1. In addition, because the data {S2-port 1} and the data {S1-port 1} are located in a same initial set, the S2 is the lower-layer network device. Further, it may be further determined that the port 1 of the S1 is connected to an uplink port of the S2. Similarly, it may be determined that the S3 is the lower-layer network device, and the port 2 of the S1 is connected to an uplink port of the S3.

Because it may be determined, in step S702, that the uplink ports of the S2 and the S3 are respective ports 0, it may be determined that the port 1 of the S1 is connected to the port 0 of the S2, and the port 2 of the S1 is connected to the port 0 of the S3, so that the network topology shown in FIG. 14 can be restored.

Optionally, Manner 1 and Manner 2 may coexist. In other words, the solutions of Manner 1 and Manner 2 may be used in combination. For example, as shown in FIG. 15, it is assumed that, on the basis of the topology shown in FIG. 14, the S1 is further connected to an S0. In this case, a plurality of initial sets may be shown as follows:

> set1: corresponding to the downlink destination MAC address MAC#A, and including: {S0-port 1, S1-port 1, S2-port 1}; and
>
> set2: corresponding to the downlink destination MAC address MAC#D, and including: {S0-port 1, S1-port 2, S3-port 1}.

In this example, data of a network device that appears most frequently in the plurality of initial sets is {S0-port 1}. Therefore, the S0 is the upper-layer network device, and a port 1 of S0 is a downlink port. Further, {S0-port 1} is deleted from the initial set, to obtain updated initial sets as follows:

> updated set1 : {S1-port 1, S2-port 1}; and
> updated set2: {S1-port 2, S3-port 1}.

In the updated initial sets, an identifier of the network device that appears most frequently is the S1. Therefore, the S1 is located at an upper layer of the S2 and the S3, the port 1 of the S1 is connected to the uplink port of the S2, and the port 2 of the S1 is connected to the uplink port of the S3.

Because it may be determined, in step S702, that the uplink ports of the S1, the S2, and the S3 are the respective ports 0, it may be determined that the port 1 of the S0 is connected to the port 0 of the S1, the port 1 of the S1 is connected to the port 0 of the S2, and the port 2 of the S1 is connected to the port 0 of the S3, so that the network topology shown in FIG. 15 can be restored.

Optionally, if one port of a network device is connected to a plurality of network devices in the restored network topology, the device may fail to collect data. To be specific, a MAC table of a network device is not collected. In this scenario, the foregoing steps S701 to S705 may be performed again, or the foregoing steps S702 to S705 may be performed again after an administrator confirms the device that does not collect the data and completes data collection of the device.

Based on the foregoing solution, in this application, the uplink port of the network device can be obtained through analysis by using the MAC table of the network device, without depending on external configuration or another protocol (for example, an STP or an ARP), so that external dependency is reduced and usability of the solution is improved. In addition, the connection relationship between the plurality of network devices may be obtained based on the plurality of initial sets. In comparison with a current technology, it is unnecessary to compare all MAC addresses learned on a port when a connection relationship between every two network devices is calculated, so that computing efficiency is improved. In addition, in a process of topology calculation, new networking may be applied, without depending on a single-root assumption of a tree network. For example, a network topology of dual-homed networking may be restored. That is, this solution has high adaptability.

Moreover, in the foregoing solution, provided that one MAC address on a forwarding path is learned by all network devices on the path, the connection relationship between the network devices on the path may be restored. For example, based on the example shown in FIG. 9, a forwarding path S1-S2-VM is used as an example. It is assumed that a MAC table on the port 1 of the S2 is aged. To be specific, the set1 corresponding to the example shown in FIG. 9 is {S1-port 1}, and the set2, the set3, and the set4 remain unchanged. In this scenario, a connection relationship between the S1 and the S2 may also be determined in step S704.

The forwarding path S1-S2-VM is used as an example. A MAC address (denoted as MAC#A) of a VM1 and a MAC address (denoted as MAC#B) of a VM2 exist in MAC tables of different network devices on the path. It is assumed that MAC#B is aged on the S1 or the S2, the connection relationship between the S1 and the S2 may also be determined by using MAC#A. For example, MAC#B is aged on the S2. To be specific, the set2 corresponding to the example shown in FIG. 9 is {S1-port 1}. Alternatively, MAC#B is aged on both the S1 and the S2. To be specific, the initial sets corresponding to the example shown in FIG. 9 do not include the set2. The connection relationship between the S1 and the S2 may also be determined in step S704.

In other words, in the solution of this application, even if the MAC table is aged, the network topology may be restored, so that a requirement for collecting the MAC table is reduced. However, in the current technology, when the MAC table is collected, aging of the MAC table needs to be avoided.

It should be noted that the solution shown in FIG. 7 is described by using an example in which the method for determining the uplink port shown in step S702 is combined with the method for determining the connection relationship shown in steps S703 and 5704. It is clear that the method shown in step S702 and the method shown in steps S703 and S704 may also be decoupled for use. For example, the uplink port may be determined by using the method shown in step S702, and the connection relationship may be determined by using the method corresponding to the formula (1); or the uplink port may be determined by using a protocol such as an ARP, and the connection relationship may be determined by using the method shown in steps S703 and S704. This is not specifically limited in this application.

In a possible implementation, a data collection apparatus collects MAC tables of network devices, and then sends the collected MAC tables to a topology computing apparatus. In other words, step S701 may include: receiving the MAC tables of the plurality of network devices from the data collection apparatus.

Optionally, the data collection apparatus may log in to the network device in a manner such as telnet or ssh, query the MAC table of the network device, and save the MAC table, to send the MAC table of the network device to the topology computing apparatus, or the network device may actively send the MAC table to the data collection apparatus.

For example, information about the MAC table saved by the data collection apparatus may be as follows: {"subnet": "vlan 1", "device": "XXX-2f-1", "port": "GigabitEthernetl/0/1", "mac": "xxxx-xxxx-xxxx"}, where a value of subnet indicates a VLAN in which the network device is located, a value of device is an identifier or a name of the network device, a value of port is a port number of a port of the network device, and a value of mac is a MAC address learned on the port.

Optionally, when the data collection apparatus and the topology computing apparatus are integrated into one device, the data collection apparatus may send the MAC tables of the plurality of network devices to the topology computing apparatus through an internal interface (a hardware interface or a software interface) inside the device. When the data collection apparatus and the topology computing apparatus are implemented by two different devices, the data collection apparatus may send the MAC tables of the plurality of network devices to the topology computing apparatus through an interface for communicating with an external device.

In a possible implementation, the data collection apparatus may log in to the network device to obtain a configuration file of the network device, check whether the network device performs MLAG or VRRP configuration, that is, whether a protection group exists, and if the protection group exists, collect information about the protection group. In another possible implementation, the data collection apparatus may receive the information about the protection group. For example, the network device sends the information about the protection group to the data collection apparatus.

Optionally, the collecting information about the protection group may include: if the MLAG configuration is performed, searching, based on an MLAG ID in the configuration file, for a plurality of network devices belonging to a same MLAG, and obtaining a downlink port of the MLAG from the configuration file; or if the VRRP configuration is performed, determining, based on a VRRP ID and an interface IP address in the configuration file, a plurality of network devices belonging to a same VRRP group, and obtaining a downlink port of the VRRP group from the configuration file.

For example, the information about the protection group collected by the data collection apparatus may be as follows: { "group _id": 1, "intf_list":[{"device"="yyy-a","port"="eth-trunk 1"},{"device"="yyy-b","port"=" eth-trunk 1"}]}, where group_id is a group identifier of the protection group, "intf_list is the information about the plurality of network devices in the same protection group, device is an identifier or a name of the network device, and port is the downlink port of the protection group. In other words, in the foregoing example, the device yyy-a and the device yyy-b belong to a same MLAG or VRRP group, and a downlink port is the eth-trunk 1.

Optionally, the data collection apparatus may send the information about the protection group, as indication information, to the topology computing apparatus. In the foregoing solution, that the topology computing apparatus obtains the indication information may include: receiving the indication information from the data collection apparatus. For a manner in which the data collection apparatus sends the indication information to the topology computing apparatus, refer to the foregoing manner of sending the MAC table. Details are not described herein again.

In a possible implementation, the data collection apparatus may log in to the network device, collect information about a VLANIF of the network device, and use a MAC address corresponding to the VLANIF as a system MAC address of the network device in a VLAN.

For example, the information about the VLANIF collected by the data collection apparatus may be as follows: {"subnet"="vlan 1 ","device"=" xxx -2f-1","sys_mac"="xxxx-xxxx-xxxx"}, where a value of subnet indicates the VLAN in which the network device is located, a value of device indicates an identifier or a name of the network device, and a value of sys_mac indicates the system MAC address of the network device.

In a possible implementation, after collecting the related information about the network device, the data collection apparatus may perform standardization processing on a data format, and then send the data to the topology computing apparatus. For example, display formats of MAC addresses of network devices of different vendors may be different, and the data collection apparatus may perform standardization conversion on the formats of the collected MAC addresses, to unify the formats of the MAC addresses. For example, "xx:xx:xx:xx:xx:xx" or "xxxx-xxxx-xxxx" is normalized to "xxxx-xxxx-xxxx".

Optionally, the foregoing functions of the data collection apparatus in this application may alternatively be implemented by the topology computing apparatus. In this scenario, interaction between the topology computing apparatus and the data collection apparatus is no longer performed, and a communication system to which this application is applicable does not include the data collection apparatus.

The network device may lack a MAC entry. For example, a MAC entry of a network device is empty or MAC entries of a plurality of network devices are empty. A possible cause is that all the MAC entries are aged or no traffic exists in networking. In a possible implementation, in this scenario, the topology computing apparatus sends a packet to at least one network device in the plurality of network devices, so that each network device generates the MAC entry, and then obtains the MAC entries of the plurality of network devices to restore the network topology. The sending a packet to a network device may be that the topology computing apparatus directly sends the packet, or the topology computing apparatus controls another device (for example, a gateway device, the plurality of network devices, or a terminal) to send the packet. The packet may be a unicast packet or a broadcast packet.

Optionally, the gateway device may be a forwarding device between local area networks connected to a top-layer network device of the plurality of network devices, for example, may be a router.

Optionally, in the scenario, when the network topology is restored based on the MAC table, an uplink port of the plurality of network devices may be determined based on step S702. In addition, a connection relationship between the network devices is determined based on whether a downlink port of a network device learns a system MAC address of another network device.

Optionally, that the topology computing apparatus controls a gateway device or the network device to send the packet may be that the topology computing apparatus sends a command to control the gateway device or the network device to send the packet to another network device, or that the topology computing apparatus logs in to the gateway device or the network device to send the packet to another network device on the gateway device or the network device. The gateway device or the network device may send the packet to another network device in the following three implementations.

16

Manner 1: The gateway device and the plurality of network devices all send broadcast packets.

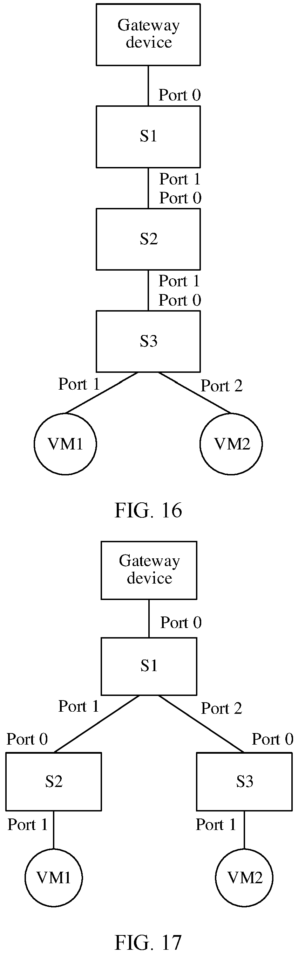

For example, for chain networking, a topology shown in FIG. 16 is used as an example. It is assumed that a MAC address of a gateway device is MAC0, and system MAC addresses of an S1, an S2, and an S3 are MAC1, MAC2, and MAC3 respectively. In Manner 1, the gateway device, the S1, the S2, and the S3 all send the broadcast packets. The following describes the MAC addresses learned on the S1, the S2, and the S3 after each device sends the broadcast packets.

The gateway device sends the broadcast packet (where a source address of the packet is the address MAC0 of the gateway device):

(1) MAC0 is learned on a port 0 of the S1;
(2) MAC0 is learned on a port 0 of the S2; and
(3) MAC0 is learned on a port 0 of the S3.

The S1 sends the broadcast packet (where a source address of the packet is the system address MAC1 of the S1):

(1) MAC1 is learned on the port 0 of the S2; and
(2) MAC1 is learned on the port 0 of the S3.

The S2 sends the broadcast packet (where a source address of the packet is the system address MAC2 of the S2):

(1) MAC2 is learned on a port 1 of the S1; and
(2) MAC2 is learned on the port 0 of the S3.

The S3 sends the broadcast packet (where a source address of the packet is the system address MAC3 of the S3):

(1) MAC3 is learned on a port 1 of the S2; and
(2) MAC3 is learned on the port 1 of the S1.

To be specific, after the gateway device, the S1, the S2, and the S3 send the broadcast packets, MAC tables of the S1, the S2, and the S3 may be respectively shown in Table 9, Table 10, and Table 11.

**Table 9 (MAC table of the S1)**

| MAC address | Port |
| --- | --- |
| MAC0 | Port 0 |
| MAC2 | Port 1 |
| MAC3 | Port 1 |

**Table 10 (MAC table of the S2)**

| MAC address | Port |
| --- | --- |
| MAC0 | Port 0 |
| MAC1 | Port 0 |
| MAC3 | Port 1 |

**Table 11 (MAC table of the S3)**

| MAC address | Port |
| --- | --- |
| MAC0 | Port 0 |
| MAC1 | Port 0 |

(continued)

| MAC address | Port |
|---|---|
| MAC2 | Port 0 |

With reference to Table 9, Table 10, and Table 11, it can be determined that MAC0 appears most frequently in the three MAC tables, and ports on which MAC0 is learned are the ports 0 of the S1, the S2, and the S3. Therefore, uplink ports of the S1, the S2, and the S3 are the respective ports 0, and other ports than the ports 0 are downlink ports.

In addition, as shown in Table 9, the system address MAC2 of the S2 and the system address MAC3 of the S3 are learned on the downlink port (namely, the port 1) of the S1, so that it can be determined that the S1 is located at an upper layer of the S2 and the S3. In addition, because the system address MAC3 of the S3 is learned on the downlink port (namely, the port 1) of the S2 in Table 10, it may be determined that the S2 is located at an upper layer of the S3.

Optionally, a connection relationship between the S1, the S2, and the S3 may alternatively be determined by using initial sets determined based on Table 9, Table 10, and Table 11. For example, the initial sets determined based on Table 9, Table 10, and Table 11 may be:

set1: corresponding to the downlink destination MAC address MAC2, and including {S1-port 1}; and

set2: corresponding to the downlink destination MAC address MAC3, and including {S1-port 1, S2-port 1}.

It can be learned, based on the set1, that the system MAC address of the S2 is learned on the port 1 (downlink port) of the S1. It can be determined, based on the set2, that the system MAC address of the S3 is learned on the port 1 (downlink port) of the S1 and the port 1 (downlink port) of the S2. Because the system MAC address of the S2 is learned on the downlink port of the S1, it can be determined that the S1 is located at the upper layer of the S2. In addition, because the system MAC address of the S3 is learned on the downlink port of the S2, it may be determined that the S2 is located at the upper layer of the S3. In conclusion, the network topology shown in FIG. 16 can be restored.

For example, for hierarchical networking, a topology shown in FIG. 17 is used as an example. It is assumed that a MAC address of a gateway device is MAC0, and system MAC addresses of an S1, an S2, and an S3 are MAC1, MAC2, and MAC3 respectively. The following describes the MAC addresses learned on the S1, the S2, and the S3 after each device sends a broadcast packet.

The gateway device sends the broadcast packet (where a source address of the packet is the address MAC0 of the gateway device):

(1) MAC0 is learned on a port 0 of the S1;
(2) MAC0 is learned on a port 0 of the S2; and
(3) MAC0 is learned on a port 0 of the S3.

The S1 sends the broadcast packet (where a source address of the packet is the system address MAC1 of the S1):

(1) MAC1 is learned on the port 0 of the S2; and
(2) MAC1 is learned on the port 0 of the S3.

The S2 sends the broadcast packet (where a source address of the packet is the system address MAC2 of the S2):

(1) MAC2 is learned on a port 1 of the S1; and
(2) MAC2 is learned on the port 0 of the S3.

The S3 sends the broadcast packet (where a source address of the packet is the system address MAC3 of the S3):

(1) MAC3 is learned on a port 2 of the S1; and
(2) MAC3 is learned on the port 0 of the S2.

To be specific, after the gateway device, the S1, the S2, and the S3 send the broadcast packets, MAC tables of the S1, the S2, and the S3 may be respectively shown in Table 12, Table 13, and Table 14.

**Table 12 (MAC table of the S1)**

| MAC address | Port |
|---|---|
| MAC0 | Port 0 |
| MAC2 | Port 1 |
| MAC3 | Port 2 |

**Table 13 (MAC table of the S2)**

| MAC address | Port |
|---|---|
| MAC0 | Port 0 |
| MAC1 | Port 0 |
| MAC3 | Port 0 |

**Table 14 (MAC table of the S3)**

| MAC address | Port |
|---|---|
| MAC0 | Port 0 |
| MAC1 | Port 0 |
| MAC2 | Port 0 |

With reference to Table 12, Table 13, and Table 14, it can be learned that MAC0 appears most frequently in the three MAC tables, and ports on which MAC0 is learned are the ports 0 of the S1, the S2, and the S3. Therefore, uplink ports of the S1, the S2, and the S3 are the respective ports 0, and other ports than the ports 0 are downlink ports.

In addition, with reference to Table 12, it can be learned that the system address MAC2 of the S2 is learned on one downlink port (port 1) of the S1, and the system address MAC3 of the S3 is learned on the other downlink port (port 2) of the S1, so that it can be determined that the S1 is located at an upper layer of the S2 and the S3, and the S2 and the S3 are located at a same layer.

Optionally, a connection relationship between the S1, the S2, and the S3 may alternatively be determined by using initial sets determined based on Table 12, Table 13, and Table 14. For example, the initial sets determined based on Table 12, Table 13, and Table 14 may be:

set1: corresponding to the downlink destination MAC address MAC2, and including {S1-port 1}; and
set2: corresponding to the downlink destination MAC address MAC3, and including {S1-port 2}.

It can be learned, based on the set1, that the system MAC address of the S2 is learned on the port 1 (downlink port) of the S1. It can be determined, based on the set2, that the system MAC address of the S3 is learned on the port 2 (downlink port) of the S1. Because the system MAC addresses of the S2 and the S3 are learned on the downlink port of the S1, it can be determined that the S1 is located at the upper layer of the S2 and the S3. In addition, because the system MAC addresses of the S2 and the S3 are respectively learned on different downlink ports of the S1, it can be determined that the S2 and the S3 are located at the same layer. In conclusion, the network topology shown in FIG. 17 can be restored.

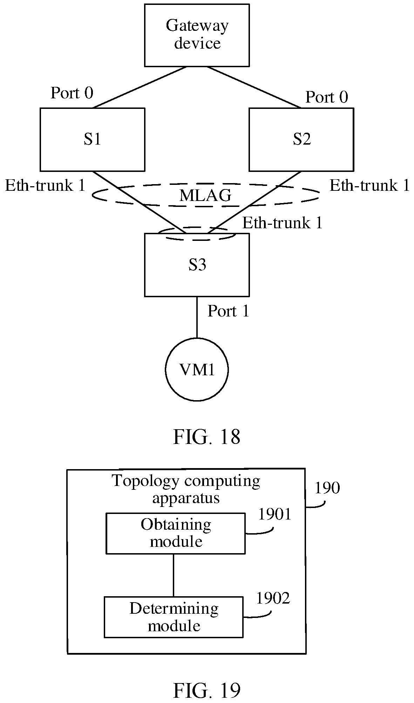

For example, for dual-homed networking, a topology shown in FIG. 18 is used as an example. It is assumed that a MAC address of a gateway device is MAC0, and system MAC addresses of an S1, an S2, and an S3 are MAC1, MAC2, and MAC3 respectively. The following describes the MAC addresses learned on the S1, the S2, and the S3 after each device sends a broadcast packet.

The gateway device sends the broadcast packet (where a source address of the packet is the address MAC0 of the gateway device):

(1) MAC0 is learned on a port 0 of the S1;
(2) MAC0 is learned on a port 0 of the S2; and

(3) MAC0 is learned on an Eth-trunk 1 of the S3.

The S1 sends the broadcast packet (where a source address of the packet is the system address MAC1 of the S1):

(1) MAC1 is learned on the Eth-trunk 1 of the S3; and
(2) MAC1 is learned on the port 0 of the S2.

The S2 sends the broadcast packet (where a source address of the packet is the system address MAC2 of the S2):

(1) MAC2 is learned on the Eth-trunk 1 of the S3; and
(2) MAC2 is learned on the port 0 of the S1.

The S3 sends the broadcast packet (where a source address of the packet is the system address MAC3 of the S3):

(1) MAC3 is learned on Eth-trunks 1 of the S1 and the S2.

To be specific, after the gateway device, the S1, the S2, and the S3 send the broadcast packets, MAC tables of the S1, the S2, and the S3 may be respectively shown in Table 15, Table 16, and Table 17.

**Table 15 (MAC table of the S1)**

| MAC address | Port |
| --- | --- |
| MAC0 | Port 0 |
| MAC3 | Eth-trunk 1 |
| MAC2 | Port 0 |

**Table 16 (MAC table of the S2)**

| MAC address | Port |
| --- | --- |
| MAC0 | Port 0 |
| MAC3 | Eth-trunk 1 |
| MAC1 | Port 0 |

**Table 17 (MAC table of the S3)**

| MAC address | Port |
| --- | --- |
| MAC0 | Eth-trunk 1 |
| MAC1 | Eth-trunk 1 |
| MAC2 | Eth-trunk 1 |

With reference to Table 15, Table 16, and Table 17, it can be learned that MAC0 appears most frequently in the three MAC tables, and ports on which MAC0 is learned are the ports 0 of the S1 and the S2, and the Eth-trunk 1 of the S3. Therefore, uplink ports of the S1 and the S2 are the respective ports 0, an uplink port of the S3 is the Eth-trunk 1, and other ports are downlink ports.

In addition, with reference to Table 15 and Table 16, it can be learned that the system address MAC3 of the S3 is learned on the downlink ports (Eth-trunk 1) of the S1 and the S2, so that it can be determined that the S1 and the S2 are located at an upper layer of the S3, and then the network topology shown in FIG. 18 can be restored with reference to MLAG or VRRP configuration.

Optionally, a connection relationship between the S1, the S2, and the S3 may alternatively be determined by using initial sets determined based on Table 15, Table 16, and Table 17. For example, the initial sets determined based on Table 15, Table 16, and Table 17 may be:

set1: corresponding to the downlink destination MAC address MAC3, and including {S1-Eth-trunk 1, S2-Eth-trunk 1}.

It can be learned, based on the set1, that the system MAC address of the S3 is learned on the Eth-trunks 1 (downlink ports) of the S1 and the S2. Because the system MAC address of the S3 is learned on the downlink ports of the S1 and the S2, it can be determined that the S1 and the S2 are located at the upper layer of the S3. Then, the network topology shown in FIG. 18 can be restored based on the MLAG or VRRP configuration.

Manner 2: The gateway device sends unicast packets to some network devices in the plurality of network devices, and the some network devices send response packets to the gateway device.

Optionally, the unicast packet may be an Internet control message protocol (Internet Control Message Protocol, ICMP) echo request (echo request) packet, and the response packet may be an ICMP echo reply (echo reply) packet.

Optionally, the gateway device may first send the packet to a network device in the plurality of network devices, and after the network devices send the response packets to the gateway device, the gateway device obtains a MAC table of each network device. If the network topology cannot be restored based on the MAC table obtained this time, the gateway device may send the packets to another part of the plurality of network devices again until the network topology is restored.

For example, for the chain networking, the topology shown in FIG. 16 is used as an example. The gateway device may first send a packet to the S2, and the S2 sends a response packet to the gateway device. In this process, the MAC addresses learned on the S1 and the S2 are as follows:

The gateway device sends the packet to the S2 (where a source address of the packet is the address MAC0 of the gateway device):

    (1) MAC0 is learned on the port 0 of the S1; and
    (2) MAC0 is learned on the port 0 of the S2.

The S2 sends the response packet to the gateway device (where a source address of the packet is the system address MAC2 of the S2):

    (1) MAC2 is learned on the port 1 of the S1.

With reference to the MAC tables of the S1 and the S2, it may be determined that the uplink ports of the S1 and the S2 are the respective ports 0, the S1 is located at the upper layer of the S2, and the port 1 of the S1 is connected to the port 0 of the S2.

In this case, the S3 still has no MAC table, and the connection relationship between the S3 and the S1 and between the S3 and the S2 is unclear. Therefore, the gateway device may continue to send the packet to the S3, and the S3 sends the response packet to the gateway device. In this process, MAC addresses learned on the S1, the S2, and the S3 are as follows:

The gateway device sends the packet to the S3 (where a source address of the packet is the address MAC0 of the gateway device):

    (1) MAC0 is learned on the port 0 of the S1;
    (2) MAC0 is learned on the port 0 of the S2; and
    (3) MAC0 is learned on the port 0 of the S3.

The S3 sends the response packet to the gateway device (where a source address of the packet is the system address MAC3 of the S3):

    (1) MAC3 is learned on the port 1 of the S2; and
    (2) MAC3 is learned on the port 1 of the S1.

With reference to the MAC tables of the S1, the S2, and the S3, it may be determined that the uplink port of the S3 is the port 0, the S2 is located at the upper layer of the S3, and the port 1 of the S2 is connected to the port 0 of the S3. In this way, the topology shown in FIG. 16 can be restored.

It may be understood that, if the gateway device first sends the packet to the S3, after the S3 sends the response packet, the S1, the S2, and the S3 may all generate the corresponding MAC tables, and the gateway device does not need to send the packet again. The topology computing apparatus may restore the topology shown in FIG. 16 based on the MAC tables of the S1 to the S3.

For example, for the hierarchical networking, the topology shown in FIG. 17 is used as an example. The gateway device may first send a packet to the S2, and the S2 sends a response packet to the gateway device. In this process, MAC addresses learned on the S1 and the S2 are as follows:

The gateway device sends the packet to the S2 (where a source address of the packet is the address MAC0 of the gateway device):

(1) MAC0 is learned on the port 0 of the S1; and
(2) MAC0 is learned on the port 0 of the S2.

The S2 sends the response packet to the gateway device (where a source address of the packet is the system address MAC2 of the S2):

(1) MAC2 is learned on the port 1 of the S1.

With reference to the MAC tables of the S1 and the S2, it may be determined that the uplink ports of the S1 and the S2 are the respective ports 0, the S1 is located at the upper layer of the S2, and the port 1 of the S1 is connected to the port 0 of the S2.

In this case, the S3 still has no MAC table, and the connection relationship between the S3 and the S1 and between the S3 and the S2 is unclear. Therefore, the gateway device may continue to send the packet to the S3, and the S3 sends the response packet to the gateway device. In this process, MAC addresses learned on the S1, the S2, and the S3 are as follows:

The gateway device sends the packet to the S3 (where a source address of the packet is the address MAC0 of the gateway device):

(2) MAC0 is learned on the port 0 of the S1; and
(3) MAC0 is learned on the port 0 of the S3.

The S3 sends the response packet to the gateway device (where a source address of the packet is the system address MAC3 of the S3):

(1) MAC3 is learned on the port 2 of the S1.

With reference to the MAC tables of the S1, the S2, and the S3, it may be determined that the uplink port of the S3 is the port 0, the S1 is located at the upper layer of the S3, and the port 2 of the S1 is connected to the port 0 of the S3. In this way, the topology shown in FIG. 17 can be restored.

For example, for the dual-homed networking, a topology shown in FIG. 18 is used as an example. The gateway device may first send a packet to the S3, and the S3 sends a response packet to the gateway device. In this process, MAC addresses learned on the S1 and the S2 are as follows:

The gateway device sends the packet to the S3 (where a source address of the packet is the address MAC0 of the gateway device):

(1) MAC0 is learned on the port 0 of the S1;
(2) MAC0 is learned on the port 0 of the S2; and
(3) MAC0 is learned on the Eth-trunk 1 of the S3.

The S3 sends the response packet to the gateway device (where a source address of the packet is the system address MAC3 of the S3):

(1) MAC3 is learned on the Eth-trunks 1 of the S1 and the S2.

With reference to the MAC tables, it may be determined that the uplink ports of the S1 and the S2 are the respective ports 0, the uplink port of the S3 is the Eth-trunk 1, the S1 and the S2 are located at the upper layer of the S3, and the downlink ports of the S1 and the S2 are the Eth-trunks 1. Then, the network topology shown in FIG. 18 can be restored with reference to the MLAG or VRRP configuration.

Manner 3: The gateway device sends the unicast packet to each network device in the plurality of network devices, and each network device sends the response packet to the gateway device.

Optionally, the unicast packet may be an ICMP echo request packet, and the response packet may be an ICMP echo reply packet.

For example, for the chain networking, a topology shown in FIG. 16 is used as an example. The gateway device sends the packet to each network device in the plurality of network devices. In a process in which each network device sends the response packet to the gateway device, the MAC addresses learned on the S1, the S2, and the S3 are as follows:

The gateway device sends the packet to the S1 (where the source address of the packet is the address MAC0 of the gateway device):

(1) MAC0 is learned on port 0 of the S1.

The S1 sends the response packet to the gateway device (where the source address of the packet is the system address MAC1 of the S1):

In this case, the MAC addresses are not learned on the S1, the S2, and the S3.

The gateway device sends the packet to the S2 (where the source address of the packet is the address MAC0 of the gateway device):

(1) MAC0 is learned on the port 0 of the S1; and
(2) MAC0 is learned on the port 0 of the S2.

The S2 sends the response packet to the gateway device (where the source address of the packet is the system address MAC2 of the S2):

(1) MAC2 is learned on the port 1 of the S1.

The gateway device sends the packet to the S3 (where the source address of the packet is MAC0 of the gateway device):

(1) MAC0 is learned on the port 0 of the S1;
(2) MAC0 is learned on the port 0 of the S2; and
(3) MAC0 is learned on the port 0 of the S3.

The S3 sends the response packet to the gateway device (where the source address of the packet is the system address MAC3 of the S3):

(1) MAC3 is learned on the port 1 of the S1; and
(2) MAC3 is learned on the port 1 of the S2.

In conclusion, it can be determined that the uplink ports of the S1, the S2, and the S3 are the respective ports 0, the other ports than the ports 0 are the downlink ports, the S1 is located at the upper layer of the S2 and the S3, and the S2 is located at the upper layer of the S3. Refer to related descriptions corresponding to Table 9, Table 10, and Table 11. Details are not described herein again.

For example, for the hierarchical networking, a topology shown in FIG. 17 is used as an example. The gateway device sends the packet to each network device in the plurality of network devices. In a process in which each network device sends the response packet to the gateway device, the MAC addresses learned on the S1, the S2, and the S3 are as follows:

The gateway device sends the packet to the S1 (where the source address of the packet is the address MAC0 of the gateway device):

(1) MAC0 is learned on the port 0 of the S1.

The S1 sends the response packet to the gateway device (where the source address of the packet is the system address MAC1 of the S1):

In this case, the MAC addresses are not learned on the S1, the S2, and the S3.

The gateway device sends the packet to the S2 (where the source address of the packet is the address MAC0 of the gateway device):

(1) MAC0 is learned on the port 0 of the S1; and
(2) MAC0 is learned on the port 0 of the S2.

The S2 sends the response packet to the gateway device (where the source address of the packet is the system address MAC2 of the S2):

(1) MAC2 is learned on the port 1 of the S1.

The gateway device sends the packet to the S3 (where the source address of the packet is MAC0 of the gateway device):

(1) MAC0 is learned on the port 0 of the S1; and
(2) MAC0 is learned on the port 0 of the S3.

The S3 sends the response packet to the gateway device (where the source address of the packet is the system address MAC3 of the S3):

(1) MAC3 is learned on the port 2 of the S1.

In conclusion, it can be determined that the uplink ports of the S1, the S2, and the S3 are the respective ports 0, the other ports than the ports 0 are the downlink ports, the S1 is located at the upper layer of the S2 and the S3, and the S2 and the S3 are located at the same layer. Refer to related descriptions corresponding to Table 12, Table 13, and Table 14. Details are not described herein again.

For example, for the dual-homed networking, a topology shown in FIG. 18 is used as an example. The gateway device sends the packet to each network device in the plurality of network devices. In a process in which each network device sends the response packet to the gateway device, the MAC addresses learned on the S1, the S2, and the S3 are as follows:

The gateway device sends the packet to the S1 (where the source address of the packet is the address MAC0 of the gateway device):

(1) MAC0 is learned on the port 0 of the S1.

The S1 sends the response packet to the gateway device (where the source address of the packet is the system address MAC1 of the S1):

In this case, the MAC addresses are not learned on the S1, the S2, and the S3.

The gateway device sends the packet to the S2 (where the source address of the packet is the address MAC0 of the gateway device):

(2) MAC0 is learned on the port 0 of the S2.

The S2 sends the response packet to the gateway device (where the source address of the packet is the system address MAC2 of the S2):

In this case, the MAC addresses are not learned on the S1, the S2, and the S3.

The gateway device sends the packet to the S3 (where the source address of the packet is MAC0 of the gateway device):

(1) MAC0 is learned on the port 0 of the S1;
(2) MAC0 is learned on the port 0 of the S2; and
(3) MAC0 is learned on the Eth-trunk 1 of the S3.

The S3 sends the response packet to the gateway device (where the source address of the packet is the system address MAC3 of the S3):

(1) MAC3 is learned on the Eth-trunks 1 of the S1 and the S2.

In conclusion, the uplink ports of the S1 and the S2 are the respective ports 0, the uplink port of the S3 is the Eth-trunk 1, the other ports are the downlink ports, and the S1 and the S2 are located at the upper layer of the S3. Then, the network topology shown in FIG. 18 can be restored based on the MLAG or VRRP configuration. Refer to related descriptions corresponding to Table 15, Table 16, and Table 17. Details are not described herein again.

Optionally, in Manner 2 and Manner 3, the connection relationship between the S1, the S2, and the S3 may alternatively be determined by using the initial set. For details, refer to related descriptions in Manner 1. Details are not described herein again.

Optionally, in the foregoing solution, the system MAC address may be identified based on the information about the VLANIF collected by the data collection apparatus.

Optionally, the topology computing apparatus may further directly send the packet to the network device. For example, the topology computing apparatus sends the unicast packets to some network devices in the plurality of network devices. For another example, the topology computing apparatus sends the unicast packet to each of the plurality of network devices. Based on the packet sent by the topology computing apparatus and the response packet sent by the network device, the plurality of network devices may generate the corresponding MAC tables. The topology computing apparatus may restore the topology of the plurality of network devices based on the MAC tables of the network devices. For a method for restoring the topology, refer to the foregoing descriptions that the topology computing apparatus controls another device to send the packet. Details are not described herein again.

With the foregoing solution, in the scenario in which all the MAC tables are aged or no traffic exists in the networking, the network topology may also be restored.

In a possible implementation, after the network topology of the plurality of network devices is restored, the network topology of the plurality of network devices may be further displayed. For example, the network topology is displayed in graphics.

Optionally, a function of displaying the network topology may be implemented by the topology computing apparatus, or may be implemented by a topology display apparatus. This is not specifically limited in this application.

Optionally, in addition to the foregoing solutions provided in this application, the network topology may be calculated in another manner. For example, the network topology is calculated by using an LLDP, the method corresponding to FIG. 5, or a manual manner, to obtain a plurality of network topologies restored in a plurality of manners.

In the scenario, the network topologies restored in different manners can be displayed. Alternatively, the network topologies restored in different manners may be combined and displayed. For example, direct connection between the downlink port of the S 1 and the uplink port of the S2 is restored in Manner 1, and direct connection between the downlink port of the S2 and the uplink port of the S3 is restored in Manner 2. In this case, the two may be combined for display, for example, displayed as the network topology shown in FIG. 2. Alternatively, when ports of a link restored in different manners are different, a link corresponding to a manner with a higher priority may be selected based on a preset priority. For example, the link 1 restored in Manner 1 is the port 1 of the S 1 connected to the port 1 of the S2, and the link 1 restored in Manner 2 is the port 1 of the S 1 connected to the port 0 of the S2. It is assumed that a priority of Manner 1 is higher than a priority of Manner 2. In this case, the link 1 restored in Manner 1 is displayed.

Based on this solution, the network topology can be displayed vividly, so that an administrator can intuitively and quickly learn about a connection status between the network devices, to save time for subsequent processing such as service deployment or fault locating.

It may be understood that, in the foregoing embodiments, methods and/or steps implemented by each device may alternatively be implemented by components (for example, a processor, a chip, a chip system, a circuit, a logic module, or software) of the device.

Correspondingly, this application further provides a communication apparatus, and the communication apparatus is configured to implement the foregoing methods. For example, the communication apparatus may be the topology computing apparatus in the foregoing method embodiments, or the communication apparatus may be the data collection apparatus in the foregoing method embodiments.

It may be understood that, to implement the foregoing functions, the communication apparatus includes a hardware structure and/or a software module for performing each function. A person skilled in the art should easily be aware that, in combination with units and algorithm steps of the examples described in embodiments disclosed in this specification, this application may be implemented by hardware or a combination of hardware and computer software. Whether a function is performed by the hardware or the hardware driven by the computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The foregoing integrated module may be implemented in a form of hardware, or may be implemented in a form of a software functional module. It should be noted that, in embodiments of this application, module division is an example, and is merely a logical function division. In actual implementation, another division manner may be used.

In an implementation scenario, an example in which the communication apparatus is the topology computing apparatus in the foregoing method embodiments is used. FIG. 19 is a schematic diagram of a structure of a topology computing apparatus 190. The topology computing apparatus 190 includes an obtaining module 1901 and a determining module 1902. Further, the apparatus may further include a display module and/or a sending module (not shown in FIG. 19).

Optionally, the topology computing apparatus 190 may further include a storage module (not shown in FIG. 19), configured to store program instructions and data.

Optionally, the determining module 1902 may be configured to perform the determining type steps performed by the topology computing apparatus in the foregoing method embodiments, and/or configured to support another process of the technology described in this specification; the obtaining module 1901 may be configured to perform the obtaining type steps performed by the topology computing apparatus in the foregoing method embodiments, and/or configured to support another process of the technology described in this specification; and the sending module may be configured to perform the sending type steps performed by the topology computing apparatus in the foregoing method embodiments, and/or configured to support another process of the technology described in this specification.

Specifically, the obtaining module 1901 is configured to obtain MAC tables of a plurality of network devices, and the determining module 1902 is configured to determine a port on which an uplink destination MAC address is learned as an uplink port of the plurality of network devices. The uplink destination MAC address is a MAC address that appears most frequently in the MAC tables of the plurality of network devices.

The determining module 1902 is further configured to determine a plurality of initial sets. The plurality of initial sets are in a one-to-one correspondence with a plurality of downlink destination MAC addresses. The plurality of downlink destination MAC addresses include MAC addresses learned on ports other than the uplink port. Each of the plurality of initial sets includes data of a network device that learns a corresponding downlink destination MAC address. The data of the network device includes an identifier of the network device and a port on which the corresponding downlink destination MAC address is learned.

The determining module 1902 is further configured to: determine a connection relationship between the plurality of network devices based on the plurality of initial sets, and determine, based on the connection relationship between the plurality of network devices and the uplink port of the plurality of network devices, a network topology corresponding to the plurality of network devices.

Optionally, the connection relationship includes: two interconnected network devices, a network device located at an upper layer and a network device located at a lower layer in the two interconnected network devices, and a downlink port of the network device located at the upper layer.

Optionally, an upper-layer network device and a lower-layer network device in the plurality of network devices are connected. The upper-layer network device is located at an upper layer of the lower-layer network device, data of the upper-layer network device appears most frequently in the plurality of initial sets, a port included in the data of the upper-layer network device is a downlink port of the upper-layer network device, and data of the lower-layer network device and the data of the upper-layer network device are located in a same initial set.

Optionally, the upper-layer network device and the lower-layer network device in the plurality of network devices are connected. The upper-layer network device is located at the upper layer of the lower-layer network device, an identifier of the upper-layer network device appears most frequently in the plurality of initial sets, the port included in the data of the upper-layer network device is the downlink port of the upper-layer network device, and the data of the lower-layer network device and the data of the upper-layer network device are located in a same initial set.

Optionally, the upper-layer network device includes a first upper-layer network device and a second upper-layer network device, and the lower-layer network device is dual-homed to the first upper-layer network device and the second upper-layer network device.

Optionally, the obtaining module 1901 is further configured to obtain indication information, where the indication information indicates that the first upper-layer network device and the second upper-layer network device belong to a same multichassis link aggregation group MLAG or a same virtual router redundancy protocol VRRP group.

Optionally, when the plurality of network devices lack the MAC tables, the sending module is configured to send a packet to at least one network device in the plurality of network devices.

Optionally, the display module is configured to display the network topology corresponding to the plurality of network devices.

All related content of the steps in the foregoing method embodiments may be cited in function descriptions of the corresponding functional modules. Details are not described herein again.

Optionally, when the topology computing apparatus 190 in FIG. 19 is a chip or a chip system, functions/implementation processes of the obtaining module 1901 and the determining module 1902 may be implemented by a processor (or a processing circuit) of the chip or the chip system. A function/implementation process of the sending module may be implemented by an input/output interface of the chip or the chip system.

Because the topology computing apparatus 190 provided in this embodiment may perform the foregoing methods, for technical effects that can be achieved by the topology computing apparatus 190, refer to the foregoing method embodiments. Details are not described herein again.

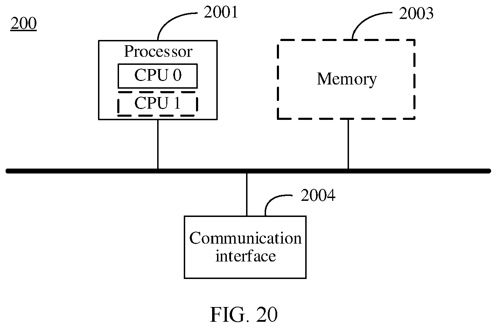

Optionally, the topology computing apparatus 190 may be presented in a form of the functional modules obtained through division in an integrated manner. The "module" herein may be an application-specific integrated circuit (application-specific integrated circuit, ASIC), a circuit, a processor and a memory that execute one or more software or firmware programs, an integrated logic circuit, and/or another component that can provide the foregoing functions. In a simple embodiment, the topology computing apparatus 190 may be in a form of a communication apparatus shown in FIG. 20.

FIG. 20 is a schematic diagram of a structure of a communication apparatus 200 according to an embodiment of this application. The communication apparatus 200 includes one or more processors 2001 and at least one communication interface (where FIG. 20 is merely described by using an example in which a communication interface 2004 and one processor 2001 are included). Optionally, the communication apparatus may further include a memory 2003 and a communication line 2002 (not shown in FIG. 20).

When the communication apparatus 200 is configured to implement the function of the topology computing apparatus shown in FIG. 19, the processor 2001 may be configured to implement the functions of the foregoing obtaining module 1901 and the foregoing determining module 1902. Specifically, the functions/implementation processes of the obtaining module 1901 and the determining module 1902 in FIG. 19 may be implemented by the processor 2001 shown in FIG. 20 by invoking computer-executable instructions stored in the memory 2003. The function/implementation process of the sending module may be implemented by the communication interface 2004 shown in FIG. 20.

Optionally, the processor 2001 may be a single-core (single-core) processor, or may be a multi-core (multi-core) processor. The processor herein may include but is not limited to at least one of the following various computing devices that run software: a central processing unit (central processing unit, CPU), a microprocessor, a digital signal processor (DSP), a microcontroller (microcontroller unit, MCU), an artificial intelligence processor, or the like. Each computing device may include one or more cores configured to perform operation or processing by executing software instructions. In a specific implementation, in an embodiment, the processor 2001 may include one or more CPUs, for example, a CPU 0 and a CPU 1 in FIG. 20.

The communication interface 2004 may be configured to communicate with another communication apparatus, or the communication interface 2004 may be a transceiver circuit located in the processor 2001, and is configured to implement signal input and signal output of the processor.

The communication line 2002 may be used for communication between different components included in the communication apparatus 200. The communication line 2002 may be an industry standard architecture (industry standard architecture, ISA) communication bus, a peripheral component interconnect (peripheral component interconnect, PCI) communication bus, an extended industry standard architecture (extended industry standard architecture, EISA) communication bus, or the like. The communication bus may be classified into an address communication bus, a data communication bus, a control communication bus, or the like.

The memory 2003 is mainly configured to store a software program and data, and may be an apparatus having a storage function. For example, the memory may be a read-only memory (read-only memory, ROM) or another type of static storage device capable of storing static information and instructions, may be a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compressed optical disc, a laser disc, an optical disc, a digital versatile disc, a Blu-ray disc, or the like), a magnetic disk storage medium or another magnetic storage device, or any other medium capable of carrying or storing expected program code in a form of instructions or data structures and capable of being accessed by a computer. This is not limited thereto. The memory may exist independently, and is connected to the processor through the communication line 2002. The memory may alternatively be integrated with the processor.

Optionally, the memory 2003 may be configured to store computer-executable instructions for performing the solutions in this application, and the computer-executable instructions are executed under control of the processor 2001.

Optionally, the computer-executable instructions in this embodiment of this application may also be referred to as application program code. This is not specifically limited in this embodiment of this application.

In a specific implementation, in an embodiment, the communication apparatus 200 may further include an output device 2005 and an input device 2006 (not shown in FIG. 20).

The output device 2005 communicates with the processor 2001, and may display information in a plurality of manners. For example, the output device 2005 may be a liquid crystal display (liquid crystal display, LCD), a light emitting diode (light emitting diode, LED) display device, a cathode ray tube (cathode ray tube, CRT) display device, a projector (projector), or the like. In a possible implementation, the output device 2005 may be configured to display a network topology of a plurality of network devices.

The input device 2006 communicates with the processor 2001, and may receive input of a user in a plurality of manners. For example, the input device 2006 may be a mouse, a keyboard, a touchscreen device, a sensor device, or the like.

It should be noted that the composition structure shown in FIG. 20 does not constitute a limitation on the communication apparatus. In addition to the components shown in FIG. 20, the communication apparatus may include more or fewer components than those shown in the figure, or combine some components, or have different component arrangements. The components shown in the figure may be implemented by hardware, software, or a combination of software and hardware.

In some embodiments, this application further provides a communication apparatus. The communication apparatus includes a processor, configured to implement the method in any one of the foregoing method embodiments.

In a possible implementation, the communication apparatus further includes a memory. The memory is configured to store necessary program instructions and necessary data. The processor may invoke program code stored in the memory, to indicate the communication apparatus to perform the method in any one of the foregoing method embodiments. It is clear that the communication apparatus may not include the memory.

In another possible implementation, the communication apparatus further includes an interface circuit. The interface circuit is a code/data read/write interface circuit, and the interface circuit is configured to: receive computer-executable instructions (where the computer-executable instructions are stored in a memory, may be directly read from the memory, or may be read by another component), and transmit the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is the chip system, the communication apparatus may include a chip, or may include a chip and another discrete component. This is not specifically limited in this embodiment of this application.

This application further provides a computer-readable storage medium. The computer-readable storage medium stores a computer program or instructions. When the computer program or the instructions are executed by a computer, the function in any one of the foregoing method embodiments is implemented.

This application further provides a computer program product. When the computer program product is executed by a computer, the function in any one of the foregoing method embodiments is implemented.

All or some of the foregoing embodiments may be implemented by software, hardware, firmware, or any combination thereof. When a software program is used to implement embodiments, all or some of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like. In embodiments of this application, the computer may include the apparatus described above.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of a plurality. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the accompanying claims, and are considered as any of or all modifications, variations, combinations or equivalents that cover the scope of this application. It is clear that a person skilled in the art can make various modifications and variations to this application without departing from the spirit and scope of this application. This application is intended to cover these modifications and variations of this application provided that they fall within the scope of protection defined by the following claims and their equivalent technologies.

**Claims**

1. A method for restoring a network topology, wherein the method comprises:

    obtaining content of media access control (MAC) tables of a plurality of network devices;
    determining a port on which an uplink destination MAC address is learned as an uplink port of the plurality of network devices, wherein the uplink destination MAC address is a MAC address that appears most frequently in the MAC tables of the plurality of network devices;

determining a plurality of initial sets, wherein the plurality of initial sets are in a one-to-one correspondence with a plurality of downlink destination MAC addresses, the plurality of downlink destination MAC addresses comprise MAC addresses learned on ports other than the uplink port of the plurality of network devices, each of the plurality of initial sets comprises data of a network device that learns a corresponding downlink destination MAC address, and the data of the network device comprises an identifier of the network device and a port on which the corresponding downlink destination MAC address is learned;

determining a connection relationship between the plurality of network devices based on the plurality of initial sets; and

determining, based on the connection relationship between the plurality of network devices and the uplink port of the plurality of network devices, a network topology corresponding to the plurality of network devices.

2. The method according to claim 1, wherein the connection relationship comprises:

two interconnected network devices in the plurality of network devices;
a network device located at an upper layer and a network device located at a lower layer in the two interconnected network devices; and
a downlink port of the network device located at the upper layer.

3. The method according to claim 1 or 2, wherein an upper-layer network device and a lower-layer network device in the plurality of network devices are connected; and
the upper-layer network device is located at an upper layer of the lower-layer network device, data of the upper-layer network device appears most frequently in the plurality of initial sets, a port comprised in the data of the upper-layer network device is a downlink port of the upper-layer network device, and data of the lower-layer network device and the data of the upper-layer network device are located in a same initial set.

4. The method according to any one of claims 1 to 3, wherein the upper-layer network device and the lower-layer network device in the plurality of network devices are connected; and
the upper-layer network device is located at the upper layer of the lower-layer network device, an identifier of the upper-layer network device appears most frequently in the plurality of initial sets, the port comprised in the data of the upper-layer network device is the downlink port of the upper-layer network device, and the data of the lower-layer network device and the data of the upper-layer network device are located in a same initial set.

5. The method according to claim 3 or 4, wherein the upper-layer network device comprises a first upper-layer network device and a second upper-layer network device, and the lower-layer network device is dual-homed to the first upper-layer network device and the second upper-layer network device.

6. The method according to claim 5, wherein the method further comprises:
obtaining indication information, wherein the indication information indicates that the first upper-layer network device and the second upper-layer network device belong to a same multichassis link aggregation group (MLAG) or a same virtual router redundancy protocol (VRRP) group.

7. The method according to claim 1 or 2, wherein the method further comprises:
sending a packet to at least one network device in the plurality of network devices, so that the plurality of network devices respectively learn the content of the MAC tables of the plurality of network devices.

8. The method according to any one of claims 1 to 7, wherein the method further comprises:
displaying the network topology corresponding to the plurality of network devices.

9. A topology computing apparatus, wherein the topology computing apparatus comprises an obtaining module and a determining module;

the obtaining module is configured to obtain content of media access control (MAC) tables of a plurality of network devices;
the determining module is configured to determine a port on which an uplink destination MAC address is learned as an uplink port of the plurality of network devices, wherein the uplink destination MAC address is a MAC address that appears most frequently in the MAC tables of the plurality of network devices;
the determining module is further configured to determine a plurality of initial sets, wherein the plurality of initial sets are in a one-to-one correspondence with a plurality of downlink destination MAC addresses, the plurality of downlink destination MAC addresses comprise MAC addresses learned on ports other than the uplink port of the plurality of network devices, each of the plurality of initial sets comprises data of a network device that learns a corresponding downlink destination MAC address, and the data of the network device comprises an identifier of the network device and a port on which the corresponding downlink destination MAC address is learned;

the determining module is further configured to determine a connection relationship between the plurality of network devices based on the plurality of initial sets; and

the determining module is further configured to: determine, based on the connection relationship between the plurality of network devices and the uplink port of the plurality of network devices, a network topology corresponding to the plurality of network devices.

10. The topology computing apparatus according to claim 9, wherein the connection relationship comprises:

two interconnected network devices in the plurality of network devices;

a network device located at an upper layer and a network device located at a lower layer in the two interconnected network devices; and

a downlink port of the network device located at the upper layer.

11. The topology computing apparatus according to claim 9 or 10, wherein an upper-layer network device and a lower-layer network device in the plurality of network devices are connected; and

the upper-layer network device is located at an upper layer of the lower-layer network device, data of the upper-layer network device appears most frequently in the plurality of initial sets, a port comprised in the data of the upper-layer network device is a downlink port of the upper-layer network device, and data of the lower-layer network device and the data of the upper-layer network device are located in a same initial set.

12. The topology computing apparatus according to any one of claims 9 to 11, wherein the upper-layer network device and the lower-layer network device in the plurality of network devices are connected; and

the upper-layer network device is located at the upper layer of the lower-layer network device, an identifier of the upper-layer network device appears most frequently in the plurality of initial sets, the port comprised in the data of the upper-layer network device is the downlink port of the upper-layer network device, and the data of the lower-layer network device and the data of the upper-layer network device are located in a same initial set.

13. The topology computing apparatus according to claim 11 or 12, wherein the upper-layer network device comprises a first upper-layer network device and a second upper-layer network device, and the lower-layer network device is dual-homed to the first upper-layer network device and the second upper-layer network device.

14. The topology computing apparatus according to claim 13, wherein

the obtaining module is further configured to obtain indication information, wherein the indication information indicates that the first upper-layer network device and the second upper-layer network device belong to a same multichassis link aggregation group (MLAG) or a same virtual router redundancy protocol (VRRP) group.

15. The topology computing apparatus according to claim 9 or 10, wherein the topology computing apparatus further comprises a sending module; and

the sending module is configured to send a packet to at least one network device in the plurality of network devices.

16. The topology computing apparatus according to any one of claims 9 to 15, wherein the topology computing apparatus further comprises a display module; and

the display module is configured to display the network topology corresponding to the plurality of network devices.

17. A communication apparatus, wherein the communication apparatus comprises a processor and a memory; and

the processor is configured to: execute a computer program or instructions stored in the memory, to implement the method according to any one of claims 1 to 8.

18. A computer-readable storage medium, wherein the computer-readable storage medium stores a computer program or instructions, and when the computer program or instructions are executed, the method according to any one of claims 1 to 8 is implemented.

19. A computer program product, wherein when the computer program product runs on a communication apparatus, the method according to any one of claims 1 to 8 is performed.

FIG. 1

FIG. 2

FIG. 3

FIG. 4

FIG. 5

FIG. 6

S701 — Obtain content of MAC tables of a plurality of network devices

S702 — Determine a port on which an uplink destination MAC address is learned as an uplink port of the plurality of network devices

S703 — Determine a plurality of initial sets, where the plurality of initial sets are in a one-to-one correspondence with a plurality of downlink destination MAC addresses

S704 — Determine a connection relationship between the plurality of network devices based on the plurality of initial sets

S705 — Determine, based on the connection relationship between the plurality of network devices and the uplink port, a network topology corresponding to the plurality of network devices

FIG. 7

FIG. 8

FIG. 9

FIG. 10

FIG. 11

Port 1
MAC#A
MAC#B
MAC#C
MAC#D

S0

Port 0

Port 1
MAC#A
MAC#B

S1

Port 2
MAC#C
MAC#D

S2

Port 1
MAC#A

Port 2
MAC#B

S3

Port 1
MAC#C

Port 2
MAC#D

VM1

VM2

VM3

VM4

MAC#A

MAC#B

MAC#C

MAC#D

FIG. 12

S6

S7

Eth-trunk 1
MAC#E
MAC#F

MLAG

Eth-trunk 1
MAC#E
MAC#F

Eth-trunk 1

S8

Port 1
MAC#E

Port 2
MAC#F

VM1

VM2

MAC#E

MAC#F

FIG. 13

FIG. 14

FIG. 15

FIG. 16

FIG. 17

FIG. 18

FIG. 19

FIG. 20

## INTERNATIONAL SEARCH REPORT

| International application No. |
| --- |
| **PCT/CN2022/132880** |

| A. | CLASSIFICATION OF SUBJECT MATTER |
| --- | --- |

H04L 41/12(2022.01)i

According to International Patent Classification (IPC) or to both national classification and IPC

| B. | FIELDS SEARCHED |
| --- | --- |

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNPAT, CNKI, WPI, EPODOC, IEEE: 端口, 地址, 媒体接入控制, 次数, 频次, 频繁, 上行, 上联口, 下行, 拓扑, 连接, port, address, MAC, media access control, times, frequency, uplink, out, downlink, topology, connect

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 108206792 A (BEIJING ULTRAPOWER SOFTWARE CO., LTD.) 26 June 2018 (2018-06-26) description, paragraphs 0060-0134 | 1-19 |
| A | US 2006133297 A1 (QUIST, Danlel a et al.) 22 June 2006 (2006-06-22) entire document | 1-19 |
| A | CN 103905251 A (HANGZHOU H3C TECHNOLOGIES CO., LTD.) 02 July 2014 (2014-07-02) entire document | 1-19 |
| A | US 2014313931 A1 (ENTUITY LTD.) 23 October 2014 (2014-10-23) entire document | 1-19 |
| A | CN 107294745 A (CHINA MOBILE GROUP SICHUAN COMPANY LIMITED) 24 October 2017 (2017-10-24) entire document | 1-19 |
| A | CN 111865684 A (STATE GRID HUNAN ELECTRIC POWER CO., LTD. et al.) 30 October 2020 (2020-10-30) entire document | 1-19 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **16 December 2022** | **22 December 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

| International application No. |
| --- |
| **PCT/CN2022/132880** |

| Patent document cited in search report | | | Publication date (day/month/year) | Patent family member(s) | | | Publication date (day/month/year) |
| --- | --- | --- | --- | --- | --- | --- | --- |
| CN | 108206792 | A | 26 June 2018 | None | | | |
| US | 2006133297 | A1 | 22 June 2006 | WO | 2007061404 | A2 | 31 May 2007 |
| CN | 103905251 | A | 02 July 2014 | None | | | |
| US | 2014313931 | A1 | 23 October 2014 | AU | 2014255719 | A1 | 03 December 2015 |
| | | | | WO | 2014170457 | A1 | 23 October 2014 |
| | | | | ES | 2626578 | T3 | 25 July 2017 |
| | | | | CA | 2909888 | A1 | 23 October 2014 |
| | | | | EP | 2984800 | A1 | 17 February 2016 |
| | | | | GB | 201406963 | D0 | 04 June 2014 |
| | | | | JP | 2016519911 | A | 07 July 2016 |
| | | | | IN | 201510581 | P1 | 19 February 2016 |
| CN | 107294745 | A | 24 October 2017 | None | | | |
| CN | 111865684 | A | 30 October 2020 | None | | | |

Form PCT/ISA/210 (patent family annex) (January 2015)

44

**REFERENCES CITED IN THE DESCRIPTION**

**Patent documents cited in the description**

- CN 202111395863X